# EUROPEAN PATENT APPLICATION

(11) **EP 4 815 164 A1**
(43) Date of publication of application: **30.09.2026**
(21) Application number: 26163059.4
(22) Date of filing: 06.03.2026
(51) Int. Cl.: H01M 50/383, H01M 50/204, H01M 50/213, H01M 50/24

(54) **BATTERY PACK**

(30) Priority: 28.03.2025 KR 20250040710
(71) Applicant: SAMSUNG SDI CO., LTD., Yongin-si, Gyeonggi-do 17084 (KR)
(72) Inventor: HWANG, Ho Ryong, 16678 Suwon-si (KR); KIM, Ha Neul, 16678 Suwon-si (KR); KANG, Chang Min, 16678 Suwon-si (KR); HONG, Ki Sung, 16678 Suwon-si (KR)
(74) Representative: Marks & Clerk LLP

(57) **Abstract**

A battery pack includes a housing, a plurality of battery cells accommodated in the housing, a holder in the housing and supporting the battery cells, and one or more flame pipes in the holder and configured to guide a flow of flames emitted from a battery cell of the plurality of battery cells along a certain path.

## Description

### BACKGROUND

### 1. Field

Aspects of embodiments of the present disclosure relate to a battery pack.

### 2. Description of the Related Art

Generally, secondary batteries are batteries that can be charged and discharged, unlike primary batteries that cannot be recharged. Low-capacity secondary batteries may be used in portable small electronic devices, such as smartphones, feature phones, laptop computers, digital cameras, and camcorders, while high-capacity secondary batteries are widely used as power sources for motor driving in hybrid vehicles, electric vehicles, and the like, and batteries for power storage, or the like. These secondary batteries include an electrode assembly composed of a positive electrode and a negative electrode, a case which accommodates the electrode assembly, and an electrode terminal connected to the electrode assembly.

The secondary battery may be used as a battery pack formed of a plurality of unit battery cells connected in series and/or parallel to provide high energy density. The battery pack may be formed by interconnecting electrode terminals of a plurality of unit batteries to meet a desired amount of power, and to implement a high-power secondary battery of, for example, an electric vehicle.

The above-described information disclosed in the technology that forms the background of the present disclosure is provided to facilitate understanding of the background of the present disclosure, and may include information that does not constitute the related art.

### SUMMARY

According to an aspect of embodiments of the present disclosure, a battery pack is capable of preventing (preventing or substantially preventing) chain ignition by reducing an influence of flames emitted from the battery cells on surrounding battery cells.

The above and other aspects and features of the present disclosure will be described in or will be apparent from the following description of some embodiments of the present disclosure.

According to one or more embodiments of the present disclosure, a battery pack includes: a housing; a plurality of battery cells accommodated in the housing; a holder in the housing and supporting the battery cells; and one or more flame pipes in the holder and configured to guide a flow of flames emitted from a battery cell of the plurality of battery cells along a certain path.

The holder may include: a first holder supporting a first surface of each of the plurality of battery cells; and a second holder supporting a second surface of each of the plurality of battery cells and facing the first holder in a first direction.

The first holder may include: a first holder main body; one or more first holes in the first holder main body and passing therethrough such that at least a portion of the first surface is exposed to the housing; and one or more second holes in the first holder main body and spaced apart from the first hole, in which the flame pipe is installed, and which defines a path through which flames between the first holder main body and the housing flow into the flame pipe.

The first holder main body may include: a first support plate extending in an arrangement direction of the plurality of battery cells; a first outer surface on the first support plate, facing the housing and defining a first dispersion space, in which flames emitted from the battery cell of the plurality of battery cells are dispersed, between the housing and the first outer surface; a first inner surface on the first support plate and facing the battery cells; and a first partition wall protruding from the first inner surface in the first direction and in contact with side surfaces of the plurality of battery cells.

The first partition wall may include: a partition wall main body in contact with the side surfaces of the battery cells and configured to block flames emitted from the first surface from entering the side surfaces of the battery cells; and a partition wall groove configured as a hollow in the partition wall main body such that the partition wall main body elastically contacts with the battery cell, and having a width that varies according to a contact pressure between the partition wall main body and the battery cell.

The first holder may further include a first protrusion protruding from the first outer surface toward the housing and defining the first dispersion space with a first width between the housing and the first holder.

The second holder may include: a second holder main body facing the first holder in the first direction; and one or more third holes in the second holder main body and defining a path, in which flames passing through the flame pipe flow, between the second holder main body and the housing.

The second holder main body may include: a second support plate extending in an arrangement direction of the plurality of battery cells; a second outer surface on the second support plate, facing the housing and defining a second dispersion space, in which flames passing through the flame pipe are dispersed, between the housing and the second outer surface; a second inner surface on the second support plate and facing the battery cells; and a second partition wall protruding from the second inner surface in the first direction and in contact with side surfaces of the plurality of battery cells.

The second holder may further include a second protrusion protruding from the second outer surface toward the housing and defining the second dispersion space with a second width between the housing and the second holder.

The second hole may include a first pipe coupling portion to which an open first end portion of the flame pipe is coupled, and the third hole may include a second pipe coupling portion to which an open second end portion of the flame pipe is coupled.

The first holder may further include a first pipe guide protruding from an edge of the second hole toward the second holder, the second hole may further include a second pipe guide protruding from an edge of the third hole toward the first holder, and the flame pipe may be arranged to cover a space between the first pipe guide and the second pipe guide.

The battery pack may further include: a first dispersion space between the first holder and the housing and in which flames emitted from the battery cell are dispersed; and a second dispersion space between the second holder and the housing and in which flames passing through the flame pipe are dispersed.

The flame pipe may include: a first flame pipe configured to guide a part of the flames in the first dispersion space to the second dispersion space; and a second flame pipe spaced apart from the first flame pipe and configured to guide another part of the flames in the first dispersion space to the second dispersion space or guide the flames in the second dispersion space to the first dispersion space.

The flame pipe may include: a pipe main body arranged parallel to the battery cells; and holder coupling portions formed at end portions of the pipe main body and coupled to the holder.

The holder may include: a first holder supporting a first surface of each of the plurality of battery cells; and a second holder supporting a second surface of each of the plurality of battery cells and facing the first holder in a first direction, and the holder coupling portions may include: a first holder coupling portion at a first end portion of the pipe main body and coupled by passing through the first holder; and a second holder coupling portion at a second end portion of the pipe main body and coupled by passing through the second holder.

The pipe main body may include: a first pipe portion arranged to cover a space between the first holder and the second holder; a second pipe portion which extends from the first pipe portion toward the first holder and has the first holder coupling portion at an end portion thereof; and a third pipe portion which extends from the first pipe portion toward the second holder and has the second holder coupling portion formed at an end portion thereof.

The battery pack may further include a first flame-retardant sheet between the housing and the holder and covering an inner surface of the housing.

The housing may include: a first housing body; and a second housing body coupled to the first housing body and defining an inner space accommodating the battery cells together with the first housing body, and the first flame-retardant sheet may be arranged to cover a space between the first housing body and the second housing body.

The first flame-retardant sheet may include: a first cover portion covering a coupling portion between the first housing body and the second housing body; a second cover portion extending from the first cover portion to the first housing body and covering the first housing body; and a third cover portion extending from the first cover portion to the second housing body and covering the second housing body.

The battery pack may further include a second flame-retardant sheet covering an outer surface of the battery cell exposed to an outside of the holder.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings:
FIG. 1 is an exploded perspective view of a main part schematically illustrating a configuration of a battery pack according to one or more embodiments of the present disclosure;
FIG. 2 is a cross-sectional view schematically illustrating the configuration of the battery pack of FIG. 1;
FIG. 3 is a perspective view of the main part of FIG. 1;
FIG. 4 is a front view of FIG. 3;
FIG. 5 is an exploded perspective view of the main part of FIG. 1;
FIG. 6 is a perspective view schematically illustrating a battery cell according to an embodiment of the present disclosure;
FIG. 7 is a cross-sectional view schematically illustrating the battery cell of FIG. 6;
FIG. 8 is a perspective view schematically illustrating a battery cell according to another embodiment of the present disclosure;
FIG. 9 is a cross-sectional view schematically illustrating the battery cell of FIG. 8;
FIG. 10 is a perspective view schematically illustrating a first holder according to an embodiment of the present disclosure;
FIG. 11 is a perspective view schematically illustrating the first holder of FIG. 10 in a direction different from that of FIG. 10;
FIG. 12 is a cross-sectional view of the first holder of FIG. 10;
FIG. 13 is a perspective view schematically illustrating a second holder according to an embodiment of the present disclosure;
FIG. 14 is a perspective view schematically illustrating the second holder of FIG. 13 in a direction different from that of FIG. 13;
FIG. 15 is a cross-sectional view of the second holder of FIG. 13;
FIG. 16 is a perspective view schematically illustrating an installation structure of a flame pipe according to an embodiment of the present disclosure;
FIG. 17 is an enlarged view of a region "A" of FIG. 2;
FIG. 18 is an enlarged view of a region "B" of FIG. 2, schematically illustrating an installation structure of a first flame-retardant sheet and a second flame-retardant sheet according to an embodiment of the present disclosure;
FIG. 19 is an enlarged view of a region "C" of FIG. 2;
FIG. 20 is a cross-sectional view schematically illustrating an installation structure of a second flame-retardant sheet according to another embodiment of the present disclosure;
FIGS. 21 to 23 are conceptual diagrams for describing an example of a flame flow path generated if flames are emitted from a battery cell according to an embodiment of the present disclosure;
FIGS. 24 and 25 are conceptual diagrams for describing another example of a flame flow path generated if flames are emitted from the battery cell according to an embodiment of the present disclosure;
FIGS. 26 and 27 are graphs illustrating temperatures measured in a plurality of battery cells when the battery packs according to various embodiments of the present disclosure are applied; and
FIG. 28 is a conceptual diagram for describing various arrangement structures of battery cells and a flame pipe according to an embodiment of the present disclosure.

### DETAILED DESCRIPTION

Herein, some example embodiments of the present disclosure will be described in further detail with reference to the attached drawings. Terms or words used in this specification and claims are not to be interpreted as being limited to ordinary or dictionary meanings and are to be interpreted as having meanings and concepts consistent with the technical idea of this disclosure based on the principle that the inventor can properly define the concept of the term in order to describe his or her disclosure in the best way. Accordingly, it is to be understood that the embodiments described herein, and the configurations illustrated in the drawings are only some example embodiments of the disclosure and do not necessarily represent all of the technical ideas of the disclosure, and that there may be various equivalents and modifications that may replace the example embodiments at the time of filing.

Further, when used herein, the terms "comprise" or "include" and/or "comprising" or "including" specify the presence of the mentioned shapes, numbers, steps, operations, members, elements, and/or groups thereof, but are not intended to exclude the presence or addition of one or more other shapes, numbers, operations, members, elements, and/or groups thereof.

In addition, in order to facilitate understanding of the disclosure, the attached drawings may not be drawn to actual scale, and the dimensions of some components may be exaggerated. In addition, the same reference numbers may be assigned to the same components in different embodiments.

The statement that two objects for comparison are "the same" or "equal" means the same, equal, or substantially the same. Therefore, the same, equal, or substantially the same may include deviations that are considered low in the art, for example, deviations of less than 5%. Additionally, uniformity of a parameter over a given region may mean uniformity from an average perspective.

Although "first," "second," and the like may be used to describe various components, the components are not limited by these terms. These terms are used to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "on," "connected to," or "coupled to" another component, the above components may be directly connected or coupled to each other, but it is to be understood that one or more other components may be "interposed" between each component, or each component may be "connected," "coupled," or "linked" through another component.

As used herein, the term "and/or" includes any and all combinations of one or more of the associated listed items. Further, the use of "may" when describing embodiments of the present disclosure relates to "one or more embodiments of the present disclosure." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is to be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above." Therefore, the term "below" can encompass both the upward and downward directions.

The terms used in the present specification are intended to describe the embodiments of the present disclosure, and are not intended to limit the present disclosure.

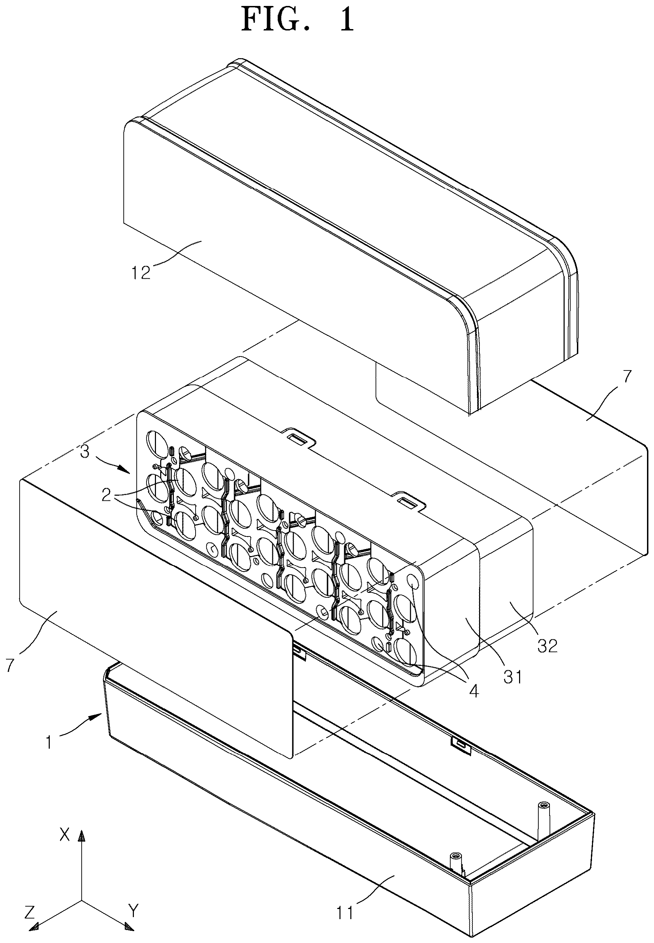

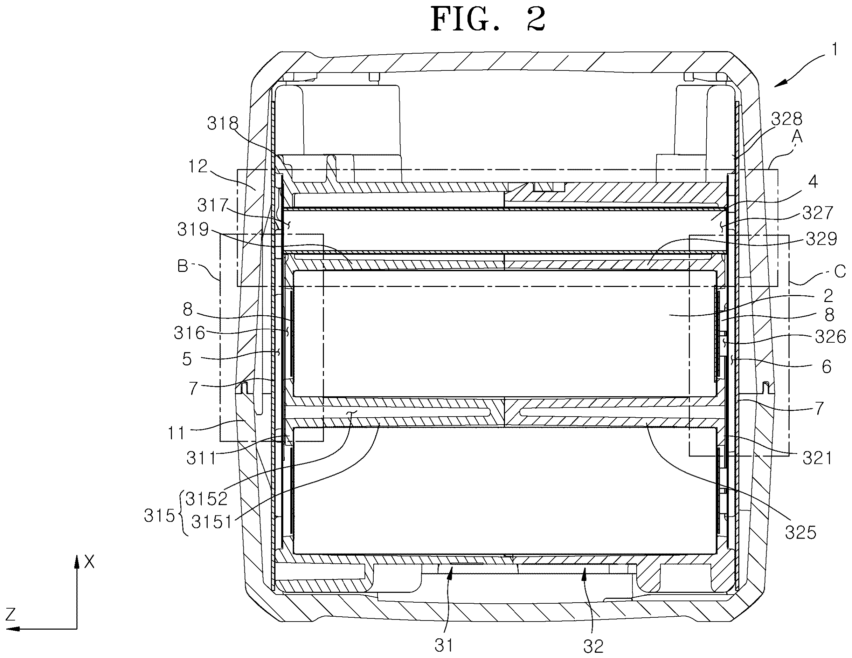

FIG. 1 is an exploded perspective view of a main part schematically illustrating a configuration of a battery pack according to one or more embodiments of the present disclosure; and FIG. 2 is a cross-sectional view schematically illustrating the configuration of the battery pack of FIG. 1.

Herein, for convenience of description, an X-direction will be referred to a vertical direction or up-down direction, a Y-direction as a left-right direction or lateral direction, and a Z-direction as a front-rear direction or first direction, based on what is illustrated in FIGS. 1 and 2.

Referring to FIGS. 1 and 2, the battery pack according to an embodiment of the present disclosure may include a housing 1, a battery cell 2, a holder 3, a flame pipe 4, a first dispersion space 5, a second dispersion space 6, a first flame-retardant sheet 7, and a second flame-retardant sheet 8.

The housing 1 may have an inner space capable of accommodating a plurality of battery cells 2, the holder 3, the flame pipe 4, and a plurality of other electronic components therein. An outer surface of the housing 1 may form an exterior of the battery pack according to one or more embodiments of the present disclosure and may be exposed to an external environment. An inner surface of the housing 1 may face an inner space in which the plurality of battery cells 2, the holder 3, and the flame pipe 4 are accommodated.

A plurality of battery cells 2 may be provided. The plurality of battery cells 2 may be supported by the holder 3 to form a certain (e.g., a set) arrangement, and may be mutually connected to each other to maintain the certain arrangement. The battery cells 2 may be accommodated in the housing 1 in a state in which at least some of the battery cells 2 are covered by the holder 3. The plurality of battery cells 2 may be arranged in the up-down direction (X direction) and the lateral direction (Y direction).

The plurality of battery cells 2 may have a structure in which a plurality of positive electrodes and negative electrodes are alternately disposed in the first direction (e.g., +Z direction). The plurality of battery cells 2 may also be disposed such that the positive electrodes face in the first direction (e.g., +Z direction) and the negative electrodes face in the opposite direction (e.g., -Z direction).

The holder 3 may have a structure in which the battery cells 2 may be mounted and accommodated. The holder 3 may support the battery cells 2 such that an electrical connection with other electronic components may be stably achieved while the battery cells 2 maintain the certain arrangement. The holder 3 may cover at least a portion of the outer surface of the battery cell 2 facing the housing 1, and may support the battery cells 2 to be spaced apart from each other at a certain (e.g., a set) interval in a certain (e.g., a set) direction. The holder 3 may be disposed inside the housing 1 while supporting the battery cells 2 and the flame pipe 4.

The flame pipe 4 may be installed in the holder 3 and may guide the flow of flames emitted from the battery cell 2 to a certain (e.g., a set) path. One or more flame pipes 4 may be provided. The flames emitted from the battery cell 2 may flow into the flame pipe 4 and may flow in the arrangement direction of the flame pipe 4 along the flame pipe 4.

The flame pipe 4 may be disposed between the battery cells 2 and disposed in parallel with the battery cells 2. If flames are emitted from any one of the battery cells 2, the flames may flow through openings of one or more flame pipes 4 close to a location where the flames are emitted from the battery cell 2, and may flow along the flame pipe 4 to an opposite side of the battery cell 2 opposite to a location where the flames are emitted.

In the description of the present disclosure, the flames are a name adopted by setting a state in which the flames are emitted from the battery cell 2, which is a situation in which heat transfer and air flow are maximized or increased in the conventional battery pack and stabilization is most actively required as the representative situation, but is not intended to be substantially limited to the flames themselves. In the description of the present disclosure, the flames may encompass an air flow according to a temperature difference formed inside the housing 1. That is, air having a higher temperature than the surroundings inside the housing 1 may implement an air flow of the same path as the flames.

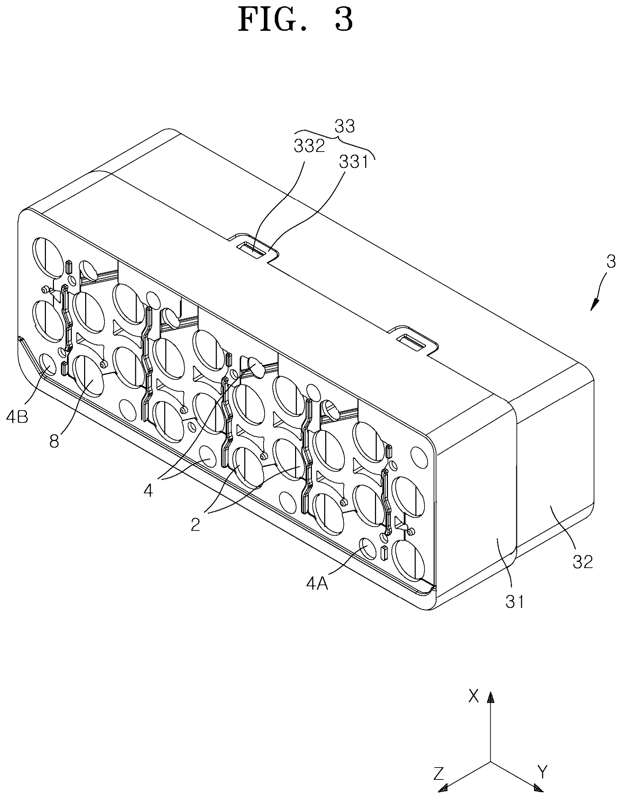

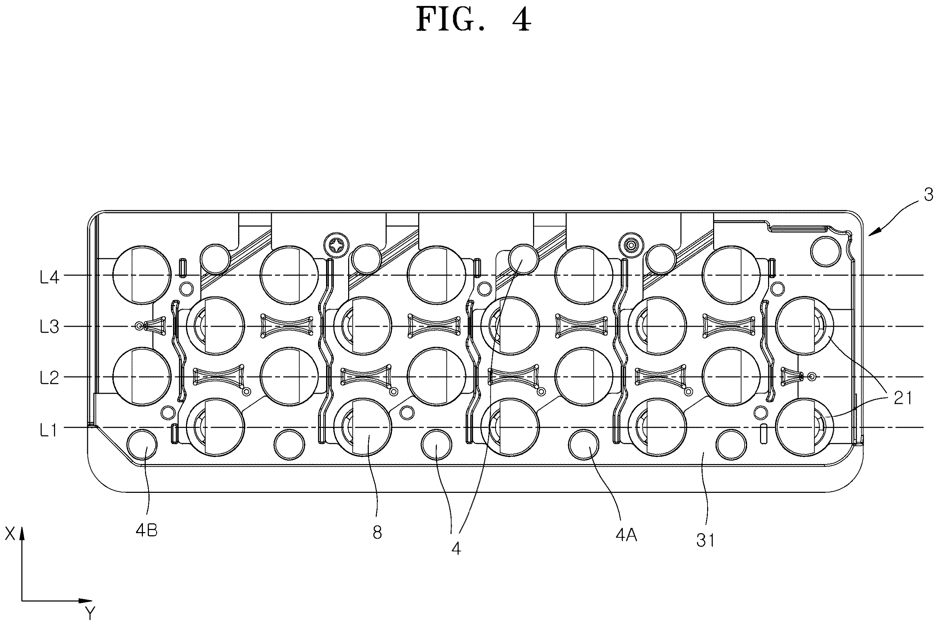

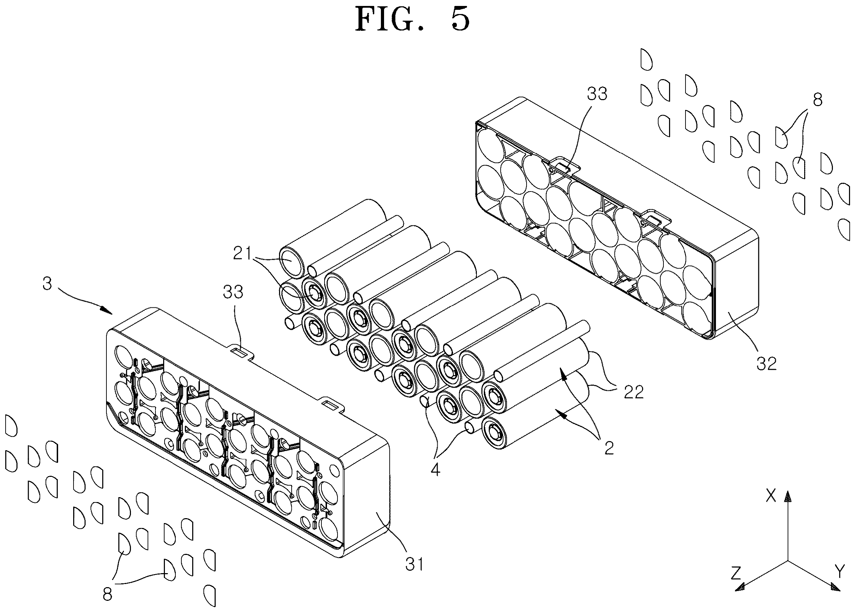

FIG. 3 is a perspective view of the main part of FIG. 1; FIG. 4 is a front view of FIG. 3, and FIG. 5 is an exploded perspective view of the main part of FIG. 1.

Referring to FIGS. 3 to 5, a plurality of battery cells 2 may be arranged in a row in the left-right direction (Y direction) while lying down in the front-rear direction (Z direction). As described above, a group in which a plurality of battery cells 2 are arranged in a row to form one layer may be referred to as a first cell layer L1. In addition, another battery cell layer may be formed by arranging a plurality of battery cells 2 side by side on an upper side of the first cell layer L1. This may be referred to as a second cell layer L2. Further, battery cell layers stacked on an upper side of the second cell layer L2 may be sequentially referred to as a third cell layer L3, a fourth cell layer L4, etc.

In an embodiment, when the plurality of battery cells 2 are arranged to form the first cell layer L1, the second cell layer L2, the third cell layer L3, and the fourth cell layer L4, the battery cells 2 forming the first cell layer L1 and the second cell layer L2 may not be located on a same vertical line (X direction extension line) and may be arranged in a staggered manner. According to an arrangement of the battery cells 2, compared to an embodiment in which all of the battery cells 2 forming the battery cell layers are located on a same vertical line, a width of the battery pack in the up-down direction (X direction) may be reduced.

In an embodiment, the battery cells 2 forming the first cell layer L1 and the third cell layer L3 may be located on the same vertical line. The battery cells 2 forming the second cell layer L2 and the fourth cell layer L4 may be located on a same vertical line. The flame pipe 4 may be disposed between the plurality of battery cells 2.

The flame pipe 4 may be disposed between the battery cells 2 forming the first cell layer L1 and the fourth cell layer L4. Accordingly, some of the flame pipes 4 may be disposed on the same vertical line as the second cell layer L2 and the fourth cell layer L4. In addition, some of the other flame pipes 4 may be disposed on the same vertical line as the first cell layer L1 and the third cell layer L3.

In this case, a flame pipe 4 disposed in the first cell layer L1 may be disposed adjacent to at least three battery cells 2, including two battery cells 2 disposed in the first cell layer L1 and one battery cell 2 disposed in the second cell layer L2. Further, a flame pipe 4 disposed in the fourth cell layer L4 may be disposed adjacent to at least three battery cells 2, including two battery cells 2 disposed in the fourth cell layer L4 and one battery cell 2 disposed in the third cell layer L3.

According to this arrangement, a plurality of flame pipes 4 may be disposed close to and uniformly or substantially uniformly spaced apart from all of the battery cells 2 forming the first cell layer L1, the second cell layer L2, the third cell layer L3, and the fourth cell layer L4. Accordingly, the flames emitted from any one of the battery cells 2 may be uniformly or substantially uniformly dispersed into the plurality of flame pipes 4 and may be easily and quickly dispersed into other spaces through the plurality of flame pipes 4.

The battery cell 2 may have a first surface 21 and a second surface 22 opposite to the first surface 21 in the first direction (Z direction), and the holder 3 may support the first surface 21 and second surface 22 of the battery cell 2. The holder 3 may include a first holder 31 and a second holder 32 respectively supporting the first surface 21 and the second surface 22 of the battery cell 2.

The first dispersion space 5 may be formed between the first holder 31 supporting the first surface 21 and the inner surface of the housing 1. The second dispersion space 6 may be formed between the second holder 32 and the housing 1. The first surface 21 and the second surface 22 of the battery cell 2 may be disposed to face the front (+Z direction) and the rear (-Z direction), respectively, and the first holder 31 and the second holder 32 may be disposed at the front and rear of the battery cells 2, respectively.

The first dispersion space 5 may be formed over an area corresponding to the front surface (inner surface) of the housing 1 and the first holder 31. The second dispersion space 6 may be formed over an area corresponding to the rear surface (inner surface) of the housing 1 and the second holder 32. Flames emitted from any one of the battery cells 2 may be easily and uniformly (uniformly or substantially uniformly) dispersed over the first dispersion space 5 and flow into the plurality of flame pipes 4. The flames passing through the plurality of flame pipes 4 may be easily and uniformly (uniformly or substantially uniformly) dispersed in the second dispersion space 6.

By this action, the flames emitted from any one of the battery cells 2 may be quickly and evenly dispersed throughout the space corresponding to the first dispersion space 5 and the second dispersion space 6. Accordingly, if the battery cell 2 ignites, flames, or thermal energy, may be discharged through the housing 1 to the outside or the battery cells 2 located around the battery cell 2 may be prevented or substantially prevented from being subjected to chain ignition due to the concentration and stagnation of flames on a side.

The first flame-retardant sheet 7 may be disposed between the housing 1 and the holder 3 and may cover the inner surface of the housing 1. The first flame-retardant sheet 7 may include a flame-retardant material, such as a ceramic material, and may be attached to the inner surface of the housing 1. In an embodiment, an adhesive sheet may be applied as the first flame-retardant sheet 7. The first flame-retardant sheet 7 may have a width and an area capable of covering all portions corresponding to the plurality of battery cells 2 and the plurality of flame pipes 4. The first flame-retardant sheet 7 may be divided into multiple pieces and provided according to any of various structures of the housing 1 and the holder 3. In an embodiment, a plurality of first flame-retardant sheets 7 may be provided.

One of the first flame-retardant sheets 7 may be disposed between the first holder 31 and the front surface (inner surface) of the housing 1. The first flame-retardant sheet 7 may have a width and an area corresponding to the front surface (inner surface) of the housing 1 and the first holder 31. The first flame-retardant sheet 7 may be attached to the front surface (inner surface) of the housing 1. In an embodiment, the first dispersion space 5 may be formed between the first flame-retardant sheet 7 and the front surface (outer surface) of the first holder 31.

In an embodiment, another of the plurality of first flame-retardant sheets 7 may be disposed between the rear surface (inner surface) of the housing 1 and the second holder 32. The first flame-retardant sheet 7 may have a width and an area corresponding to the rear surface (inner surface) of the housing 1 and the second holder 32. The first flame-retardant sheet 7 may be attached to the rear surface (inner surface) of the housing 1. In an embodiment, the second dispersion space 6 may be formed between the first flame-retardant sheet 7 and the rear surface (inner surface) of the second holder 32.

The second flame-retardant sheet 8 may cover outer surfaces of the battery cells 2 exposed to the outside of the holder 3. The second flame-retardant sheet 8 may include a flame-retardant material, such as a ceramic material, and may be attached to the battery cell 2 or the holder 3. An adhesive sheet may be applied as the second flame-retardant sheet 8. The second flame-retardant sheet 8 may be attached to the first surface 21 and the second surface 22 exposed to the first dispersion space 5 and the second dispersion space 6 of the battery cells 2. The second flame-retardant sheet 8 may have a width and a shape that may cover at least a portion of the first surface 21 and the second surface 22.

Flames emitted from any one battery cell 2 may primarily pass through the second flame-retardant sheet 8 and are buffered and then secondarily reach the first flame-retardant sheet 7, and may be dispersed in the first dispersion space 5 formed between the first flame-retardant sheet 7 and the first holder 31. The flames dispersed in the first dispersion space 5 and the second dispersion space 6 toward other battery cells 2 are interfered with by the second flame-retardant sheet 8 covering the other battery cells 2 and do not directly affect the battery cells 2.

Accordingly, a risk of chain ignition of the battery cells 2 may be reduced by the second flame-retardant sheet 8. Further, since the flames are interfered with by the second flame-retardant sheet 8, a flow to the flame pipe 4 may be more stably induced rather than flowing to other adjacent battery cells 2.

Herein, the housing 1, the battery cell 2, the holder 3, the flame pipe 4, the first dispersion space 5, the second dispersion space 6, the first flame-retardant sheet 7, and the second flame-retardant sheet 8, which are components of the battery pack according to an embodiment of the present disclosure, will be described in further detail.

Referring to FIGS. 1 and 2, the housing 1 according to an embodiment of the present disclosure may include a first housing body 11 and a second housing body 12.

The first housing body 11 may be formed to have a shape of a box with an empty interior and an open side facing the second housing body 12. A cross-sectional shape of the first housing body 11 is not limited to the quadrangular shape illustrated in FIG. 1 and may have any of various shapes, such as polygonal, circular, oval, or other shapes.

The second housing body 12 may be coupled to the first housing body 11, and may form an inner space capable of accommodating the battery cells 2 together with the first housing body 11. The second housing body 12 may be coupled to the first housing body 11 to close the inner space.

For example, the second housing body 12 may be formed to have a generally plate shape and may be disposed to face the open side of the first housing body 11. As another example, the second housing body 12 may be formed to have a shape of a box with an empty interior and an open side facing the first housing body 11. The second housing body 12 may be fixed to the first housing body 11 by any of various types of coupling methods, such as bolting, welding, or fitting.

The battery cell 2 may function as a unit structure which stores and supplies power in the battery pack. The battery cell 2 may be disposed inside at least one of the first housing body 11 and the second housing body 12.

A plurality of battery cells 2 may be provided. The plurality of battery cells 2 may be disposed to form any of various patterns such as any of a grid shape, a zigzag shape, and the like in the housing 1. In an embodiment, the plurality of battery cells 2 may be disposed in parallel with each other. A number of battery cells 2 may be varied depending on a size, shape, and the like of the housing 1.

The plurality of battery cells 2 may be electrically connected to each other by a bus bar or the like. The plurality of battery cells 2 may be connected in any of various types of series and parallel connection structures according to power specifications of the battery pack.

Herein, an example in which the battery cell 2 is a cylindrical lithium-ion secondary battery will be described. However, the present disclosure is not limited thereto, and the battery cell 2 may be a lithium polymer battery or a prismatic battery, for example.

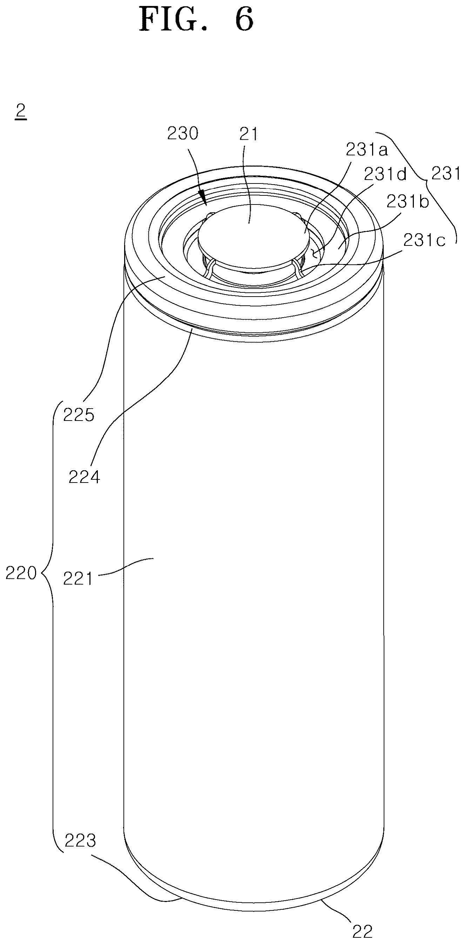

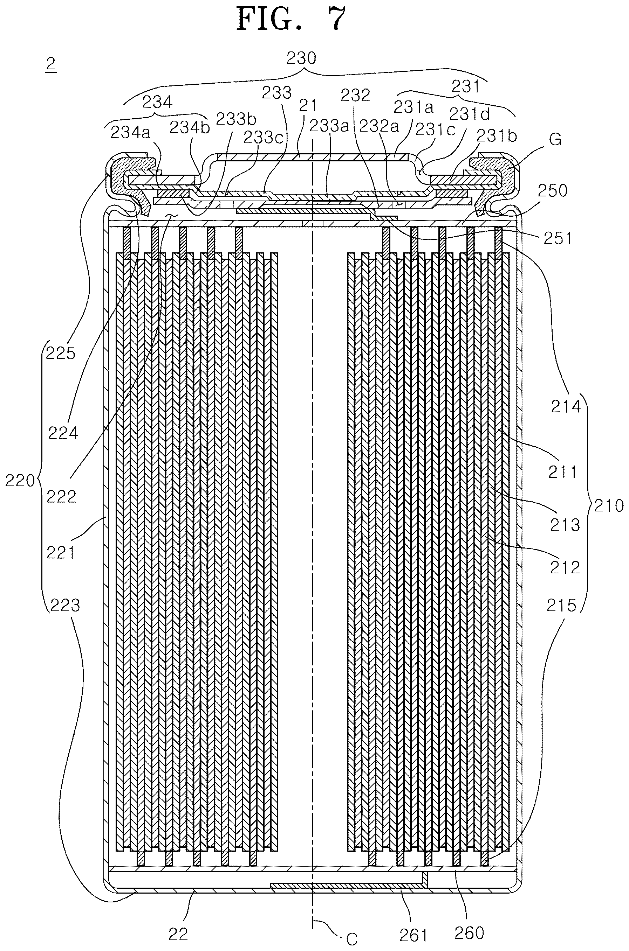

FIG. 6 is a perspective view schematically illustrating a battery cell according to an embodiment of the present disclosure; and FIG. 7 is a cross-sectional view schematically illustrating the battery cell of FIG. 6.

Referring to FIGS. 6 and 7, the battery cell 2 according to an embodiment includes an electrode assembly 210, a case 220, and a cap assembly 230.

The electrode assembly 210 may function as a unit structure that performs charging and discharging operations of power in the battery cell 2.

The electrode assembly 210 may include a first electrode plate 211, a second electrode plate 212, and a separator 213 disposed between the first electrode plate 211 and the second electrode plate 212.

In an embodiment, the electrode assembly 210 may have a form wound around a winding axis C.

The electrode assembly 210 may have a form wound around the winding axis C clockwise or counterclockwise in a state in which the first electrode plate 211, the separator 213, and the second electrode plate 212 are stacked on each other. Accordingly, the electrode assembly 210 may have a generally jelly roll shape. A cross-sectional shape of the electrode assembly 210 may have any of various shapes, such as any of an oval shape, a polygonal shape, and the like, in addition to the circular shape. Here, the winding axis C may refer to a straight line passing through the center of the electrode assembly 210.

In an embodiment, the first electrode plate 211 may function as a positive electrode of the electrode assembly 210. The first electrode plate 211 may have a form of a foil including a metal material, such as aluminum or an aluminum alloy. A type, size, and shape of the first electrode plate 211 are not particularly limited as long as the first electrode plate 211 is conductive without causing chemical changes in the battery cell. The first electrode plate 211 may be wound with a plurality of winding turns around the winding axis C.

A first active material layer (not shown) may be applied on at least a portion of the first electrode plate 211. Both, or opposite, surfaces of the first electrode plate 211 may be coated with the first active material layer, or only one surface of the first electrode plate 211 may be coated with the first active material layer.

In an embodiment, the first electrode plate 211 functions as a positive electrode, and the first active material layer may include a positive electrode active material.

The positive electrode active material may be a compound capable of reversible intercalation and deintercalation of lithium (a lithiated intercalation compound). In an embodiment, as the positive electrode active material, one or more of composite oxides of a metal selected from the group consisting of cobalt, manganese, nickel, iron, and a combination thereof and lithium may be used.

As an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0 < x < 1, 0 < y <1, 0 < z < 1, and x+y+z = 1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM) or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer may further include a positive electrode conductive material.

The positive electrode conductive material imparts conductivity to the first active material layer, and any suitable electrically conductive material that does not cause a chemical change may be used. Examples of the positive electrode conductive material may include carbon-based materials, such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, and the like, conductive polymers, such as polyphenylene derivatives, or a mixture thereof.

The first active material layer may further include a positive electrode binder.

The positive electrode binder may attach the particles constituting the positive electrode active material to each other well, and also attach the positive electrode active material to the first electrode plate 211 well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the positive electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The second electrode plate 212 may function as a negative electrode of the electrode assembly 210. The second electrode plate 212 may have a form of a foil including a metal material, such as copper, a copper alloy, nickel, or a nickel alloy. The second electrode plate 212 may be disposed to face the first electrode plate 211 at a distance (e.g., a predetermined distance).

A type, size, and shape of the second electrode plate 212 are not particularly limited as long as the second electrode plate 212 is conductive without causing chemical changes in the battery cell. The second electrode plate 212 may be wound with a plurality of winding turns around the winding axis C.

A second active material layer (not shown) may be applied on at least a portion of the second electrode plate 212. Both, or opposite, surfaces of the second electrode plate 212 may be coated with the second active material layer, or only one surface of the second electrode plate 212 may be coated with the second active material layer.

In an embodiment, the second electrode plate 212 functions as a negative electrode, and the second active material layer may include a negative electrode active material.

The negative electrode active material may include a material capable of reversible intercalation/deintercalation of lithium ions, a lithium metal, a lithium metal alloy, a material capable of doping and dedoping of lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as amorphous, plate-like, flake-like, spherical, or fiber-like natural graphite or artificial graphite, and examples of the amorphous carbon may include soft carbon, hard carbon, mesophase pitch carbide, calcined coke, or the like.

In an embodiment, as the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping of lithium, a Si-based negative electrode active material or a Sn-based negative electrode active material may be used. The Si-based negative electrode active material may be silicon, a silicon-carbon composite, SiOₓ (0 < x ≤ 2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnOₓ(0 < x ≤ 2, e.g., SnO₂), a Sn-based alloy, or a combination thereof.

The silicon-carbon composite may be a composite of silicon and amorphous carbon. According to an embodiment, the silicon-carbon composite may be in the form of silicon particles and amorphous carbon coated on surfaces of the silicon particles. For example, the silicon-carbon composite may include a secondary particle (core) in which primary silicon particles are aggregated and an amorphous carbon coating layer (shell) located on a surface of the secondary particle. The amorphous carbon may be located between the primary silicon particles, for example, such that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or Sn-based negative electrode active material may be used in combination with a carbon-based negative electrode active material.

The second active material layer may further include a negative electrode conductive material and a negative electrode binder.

The negative electrode conductive material imparts conductivity to the second active material layer, and any suitable electrically conductive material that does not cause a chemical change may be used. Examples of the negative electrode conductive material may include carbon-based materials, such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, or the like, conductive polymers, such as polyphenylene derivatives, or a mixture thereof.

The negative electrode binder may well attach particles constituting the negative electrode active material and also well attach the negative electrode active material to the second electrode plate 212.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, the aqueous binder may further include a cellulose series compound capable of giving viscosity. As the cellulose series compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The separator 213 may be disposed between the first electrode plate 211 and the second electrode plate 212. The separator 213 may prevent or substantially prevent a short circuit between the first electrode plate 211 and the second electrode plate 212 while allowing lithium ions to move between the first electrode plate 211 and the second electrode plate 212.

The separator 213 may be made of polyethylene, polypropylene, polyvinylidene fluoride, or a multilayer film of two or more layers thereof, and a mixed multilayer film such as a two-layer separator of polyethylene/polypropylene, a three-layer separator of polyethylene/polypropylene/polyethylene, or a three-layer separator of polypropylene/polyethylene/polypropylene may be used.

The separator 213 may include a porous substrate and a coating layer including an organic material, an inorganic material, or a combination thereof, which is positioned on a surface or both, or opposite, surfaces of the porous substrate.

The porous substrate may be a polymer film made of a polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more of the above materials.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer or may be in the form of a coating layer including (or containing) an organic material and a coating layer including (or containing) an inorganic material which are stacked on each other.

The separator 213 may be provided as a pair. The pair of separators 213 may be disposed to respectively face both, or opposite, surfaces of the first electrode plate 211 or the second electrode plate 212. The pair of separators 213 may be wound around the winding axis C together with the first electrode plate 211 and the second electrode plate 212.

The electrode assembly 210 according to an embodiment may further include a first tab 214 and a second tab 215.

The first tab 214 may be connected to the first electrode plate 211. The first tab 214 according to the present embodiment may extend from the first electrode plate 211 in the first direction parallel to the winding axis C. Here, the first direction may be a direction parallel to the Z-axis based on FIG. 3. A plurality of first tabs 214 may be provided.

The plurality of first tabs 214 may be arranged in a circumferential direction centered on the winding axis C. As the first electrode plate 211 is wound about the winding axis C, the plurality of first tabs 214 may be arranged in a radial direction centered on the winding axis C in addition to being arranged in the circumferential direction centered on the winding axis C. For example, the plurality of first tabs 214 may be disposed to form a spiral shape centered on the winding axis C.

In an embodiment, the first tab 214 may be formed of a same material as the first electrode plate 211. The first tab 214 may be integrally formed with the first electrode plate 211 or may be connected to the first electrode plate 211 after being manufactured separately from the first electrode plate 211.

The second tab 215 may be connected to the second electrode plate 212. The second tab 215 may extend from the second electrode plate 212 in a direction opposite to the first direction. That is, each of the first tab 214 and the second tab 215 may be formed to protrude in opposite directions from both, or opposite, end portions of the electrode assembly 210 spaced apart in a direction parallel to the winding axis C.

A plurality of second tabs 215 may be provided. The plurality of second tabs 215 may be arranged in the circumferential direction centered on the winding axis C. As the second electrode plate 212 is wound about the winding axis C, the plurality of second tabs 215 may be arranged in the radial direction centered on the winding axis C in addition to being arranged in the circumferential direction centered on the winding axis C. For example, the plurality of second tabs 215 may be disposed to form a spiral shape centered on the winding axis C.

In an embodiment, the second tab 215 may be formed of a same material as the second electrode plate 212. The second tab 215 may be integrally formed with the second electrode plate 212 or may be connected to the second electrode plate 212 after being manufactured separately from the second electrode plate 212.

The case 220 may form a general exterior of the battery cell 2 and may accommodate the electrode assembly 210. The case 220 may be electrically conductive. For example, the case 220 may include at least one material among steel, stainless steel, aluminum, and an aluminum alloy. Accordingly, the case 220 may protect the electrode assembly 210 from an external impact and perform a heat dissipation function of dissipating heat accompanying the charging and discharging operations of the electrode assembly 210 to the outside.

The case 220 according to an embodiment may include a can 221 having a cylindrical shape. A central axis of the can 221 may be disposed on a same straight line as the winding axis C of the electrode assembly 210.

The case 220 may further include a closed portion 223 that closes an end portion of the can 221. The closed portion 223 according to an embodiment may be formed to have a generally circular plate shape. The closed portion 223 may be disposed perpendicular to the winding axis C. A circumferential surface of the closed portion 223 may be joined to the can 221. In an embodiment, the closed portion 223 may be molded or formed integrally with the can 221, such as by a drawing process or the like, or may be joined to the can 221 by welding or the like after being manufactured separately from the can 221.

The case 220 may further include an opening 222 that opens another end portion of the can 221. The opening 222 may provide a path through which the electrode assembly 210 is inserted into the case 220 in the another end portion region of the case 220.

The opening 222 according to an embodiment may refer to an empty space surrounded by the another end portion region of the can 221 located at an opposite side of the closed portion 223.

In an embodiment, the first tab 214 may be disposed to face the opening 222 inside the case 220, and the second tab 215 may be disposed to face the closed portion 223 inside the case 220.

The case 220 according to an embodiment may further include a beading portion 224.

The beading portion 224 may protrude into the case 220. The beading portion 224 may restrict the cap assembly 230 described below from being inserted into the case 220 beyond a certain (e.g., a set) distance.

The beading portion 224 according to an embodiment may be disposed at the another end portion of the can 221 adjacent to the opening 222. A central portion of the beading portion 224 may be formed to be concave toward the winding axis C. The beading portion 224 may be integrally formed with the can 221, or may be coupled to the can 221 after being manufactured separately from the can 221.

Herein, an example in which the battery cell 2 according to an embodiment includes the beading portion 224 will be described, but the present disclosure is not limited thereto, and the battery cell 2 may be configured in a form in which the beading portion 224 is omitted.

The cap assembly 230 may be disposed to face the electrode assembly 210 and may seal the case 220. For example, the cap assembly 230 may be disposed at the another end portion of the can 221, that is, on the opening 222 side. The cap assembly 230 may be disposed to face the electrode assembly 210 in the first direction.

In an embodiment, the cap assembly 230 may be electrically connected to the first tab 214. In an embodiment, the first electrode plate 211 functions as a positive electrode of the electrode assembly 210, and the cap assembly 230 may function as a positive electrode terminal of the battery cell 2.

The cap assembly 230 according to an embodiment may include a cap up 231, a cap down 232, a vent plate 233, and a connection portion 234.

The cap up 231 may form an outer exterior of the cap assembly 230. A central axis of the cap up 231 may be located coaxially with the winding axis C. A central part of the cap up 231 may protrude outward from the case 220. The cap up 231 may include an electrically conductive material, such as nickel, aluminum, copper, or the like.

The cap up 231 according to an embodiment may include a small diameter portion 231a, a large diameter portion 231b, and a bridge 231c.

The small diameter portion 231a and the large diameter portion 231b may have circular plate shapes having different diameters. The diameter of the small diameter portion 231a may be smaller than the diameter of the large diameter portion 231b. The central axes of the small diameter portion 231a and the large diameter portion 231b may be disposed coaxially with the winding axis C. The small diameter portion 231a and the large diameter portion 231b may be disposed to face each other in the first direction. In an example, the large diameter portion 231b and the small diameter portion 231a may be disposed sequentially in the first direction from the electrode assembly 210. The small diameter portion 231a may protrude outward from the case 220. The large diameter portion 231b may have a ring shape formed with a hollow central portion.

The bridge 231c may be disposed between the small diameter portion 231a and the large diameter portion 231b. Both, or opposite, end portions of the bridge 231c may be respectively connected to an outer circumferential surface of the small diameter portion 231a and an inner circumferential surface of the large diameter portion 231b. In an embodiment, the bridge 231c may have a curved surface shape extending from the small diameter portion 231a to the large diameter portion 231b.

A cap up hole 231d for discharging gas or the like generated in the case 220 to the outside of the case 220 may be formed in the cap up 231. The cap up hole 231d according to an embodiment may have a shape of a hole passing through the bridge 231c of the cap up 231. A plurality of cap up holes 231d may be provided. The plurality of cap up holes 231d may be arranged at a certain interval along a circumference of a central portion of the cap up 231.

The cap down 232 may be disposed to face the cap up 231 and may be electrically connected to the electrode assembly 210.

The cap down 232 according to an embodiment may be formed to have a generally circular plate shape. The cap down 232 may be disposed in the case 220. The cap down 232 may be disposed below the cap up 231. That is, the cap down 232 may be disposed between the cap up 231 and the electrode assembly 210. In an embodiment, a central axis of the cap down 232 may be disposed coaxially with the winding axis C. An upper surface of the cap down 232 may be disposed spaced apart from a lower surface of the cap up 231.

In an embodiment, an area of the cap down 232 may be smaller than a cross-sectional area of the electrode assembly 210 perpendicular to the winding axis C. However, the area of the cap down 232 is not limited thereto, and, in an embodiment, may be the same as the cross-sectional area of the electrode assembly 210 or may be greater than the cross-sectional area of the electrode assembly 210.

The cap down 232 may include an electrically conductive material, such as nickel, aluminum, copper, or the like. The cap down 232 may be electrically connected to the first tab 214 of the electrode assembly 210.

A cap down hole 232a vertically passing through the cap down 232 may be formed in the cap down 232. The cap down hole 232a may provide a path through which gas or the like generated in the case 220 passes through the cap down 232 if an overcurrent occurs. A plurality of cap down holes 232a may be provided. The plurality of cap down holes 232a may be arranged along a circumference centered on the central axis of the cap down 232.

The vent plate 233 may be disposed between the cap up 231 and the cap down 232. The vent plate 233 may provide a current conduction path between the cap up 231 and the cap down 232 when the battery cell 2 normally operates. The vent plate 233 may include an electrically conductive material, such as nickel, aluminum, copper, or the like.

The vent plate 233 may be deformed by a pressure of gas generated in the case 220 and block an electrical connection between the cap up 231 and the cap down 232 if an overcurrent occurs. The vent plate 233 may rupture if the internal pressure of the case 220 rises above a certain (e.g., a set) magnitude, and may open a gas discharge path between the cap up hole 231d and the cap down hole 232a.

The vent plate 233 according to an embodiment may have a substantially circular plate shape. The vent plate 233 may be disposed such that upper and lower surfaces thereof face the cap up 231 and the cap down 232, respectively. The lower surface of the vent plate 233 may be disposed to face the cap down hole 232a. In an embodiment, a central axis of the vent plate 233 may be disposed coaxially with the winding axis C.

The vent plate 233 may include a contact portion 233a.

The contact portion 233a according to an embodiment may protrude from the vent plate 233 toward the cap down 232 and may come into contact with the cap down 232. The contact portion 233a may electrically connect the vent plate 233 and the cap down 232. The contact portion 233a may be disposed at a central portion of the vent plate 233. In an embodiment, a central axis of the contact portion 233a may be disposed coaxially with the winding axis C.

If the vent plate 233 is deformed due to an increase in internal pressure of the case 220, the contact portion 233a may be separated from the cap down 232. Accordingly, if an overcurrent occurs, the electrical connection between the cap down 232 and the vent plate 233 may be disconnected.

An insulator 233b may be disposed between the vent plate 233 and the cap down 232. The insulator 233b may prevent or substantially prevent a remaining region of the vent plate 233 excluding the contact portion 233a from coming into direct contact with the cap down 232. Accordingly, the insulator 233b may cause the vent plate 233 and the cap down 232 to be electrically connected only by the contact portion 233a.

The insulator 233b according to an embodiment may be formed to have a hollow ring shape. In an embodiment, a central axis of the insulator 233b may be coaxially located with the winding axis C and the central axis of the vent plate 233. An upper surface of the insulator 233b may be in contact with the lower surface of the vent plate 233, and a lower surface of the insulator 233b may be in contact with the upper surface of the cap down 232. The insulator 233b may be formed of an insulating material, such as polyethylene (PE), polypropylene (PP), polyethylene terephthalate (PET), or the like.

The connection portion 234 may extend from the vent plate 233 and may be connected to the cap up 231. The connection portion 234 may support the vent plate 233 with respect to the cap up 231 and provide an electrical connection between the cap up 231 and the vent plate 233. The connection portion 234 may be formed of a same material as the vent plate 233. The connection portion 234 may be formed integrally with the vent plate 233, or may be coupled to the vent plate 233 after being manufactured separately from the vent plate 233.

The connection portion 234 according to an embodiment may include a support portion 234a and a hinge portion 234b.

The support portion 234a may form an exterior of a side of the connection portion 234 and may be connected to the cap up 231.

The support portion 234a according to an embodiment may be disposed to surround an end portion of the cap up 231, and, in an embodiment, an edge region of the large diameter portion 231b. For example, the support portion 234a may have a generally U-shaped cross-sectional shape. An end portion of the support portion 234a may be brought into contact with an upper surface of the large diameter portion 231b, and another end portion of the support portion 234a may be bent downward and brought into contact with a lower surface of the large diameter portion 231b. The support portion 234a may be joined to the cap up 231 by any of various types of coupling methods, such as any of laser welding, ultrasonic welding, resistance welding, and the like.

The support portion 234a may be disposed to face the beading portion 224 in the first direction. For example, the support portion 234a may be disposed above the beading portion 224. Accordingly, when the battery cell 2 is assembled, the beading portion 224 may restrict the cap assembly 230 from being inserted into the case 220 beyond a certain (e.g., a set) distance.

The hinge portion 234b may form the exterior of another side of the connection portion 234 and may be disposed between the support portion 234a and the vent plate 233. The hinge portion 234b may interconnect the support portion 234a and the vent plate 233 and induce deformation of the vent plate 233 if the internal pressure of the case 220 increases.

The hinge portion 234b according to an embodiment may have a generally circular ring shape and may be disposed between the support portion 234a and the vent plate 233. An inner circumferential surface of the hinge portion 234b may be connected to the vent plate 233, and an outer circumferential surface of the hinge portion 234b may be connected to the other end portion of the support portion 234a. In an embodiment, the hinge portion 234b may extend downward in a stepwise manner from the outer circumferential surface to the inner circumferential surface. For example, a central portion of the hinge portion 234b may have a cross-section which is bent in an L shape.

If an overcurrent occurs, the vent plate 233 may be deformed based on the hinge portion 234b. For example, if the internal pressure of the case 220 increases due to an overcurrent, gas passing through the cap down hole 232a presses the vent plate 233 upward, and the vent plate 233 may be deformed into a form in which the central portion protrudes convexly toward the cap up 231 due to a change in bending angle of the hinge portion 234b.

The battery cell 2 according to an embodiment may further include a vent notch 233c.

In an embodiment, the vent notch 233c may be formed to be concave from an outer surface of the vent plate 233. The vent notch 233c may guide a rupture of the vent plate 233 if the internal pressure of the case 220 rises above a certain (e.g., a set) magnitude.

The vent notch 233c according to an embodiment may have a groove shape that is concavely recessed from the outer surface of the vent plate 233. In an embodiment, a cross-sectional area of the vent notch 233c may gradually narrow toward an end portion. In an embodiment, the vent notch 233c may be formed in a ring shape along an arc shape centered on the winding axis C.

A crimping portion 225 for fixing the cap assembly 230 described below may be formed at the other end portion of the can 221 in which the opening 222 is formed.

The crimping portion 225 according to an embodiment may be bent from the other end portion of the can 221 and may be disposed to surround an outer surface of the support portion 234a. The crimping portion 225 may fix the position of the cap assembly 230 and prevent or substantially prevent the cap assembly 230 from being separated from the case 220.

The crimping portion 225 may be integrally formed with the case 220, or may be manufactured separately from the case 220 and then coupled to the case 220. In an embodiment, a material of the crimping portion 225 may be the same as a material of the case 220.

The battery cell 2 according to an embodiment may further include a gasket G disposed between the crimping portion 225 and the cap assembly 230. The gasket G may electrically insulate the case 220 and the cap assembly 230 from each other and prevent or substantially prevent moisture or an electrolyte from being introduced or discharged between the case 220 and the cap assembly 230.

The gasket G according to an embodiment may include an insulating material, such as rubber, polyethylene (PE), polypropylene (PP), polyethylene terephthalate (PET), or the like. The gasket G may be formed to have a generally ring shape. In an embodiment, the gasket G may have a generally U-shaped cross-section. An upper portion of an outer surface of the gasket G may be in close contact with the inner surface of the crimping portion 225. A lower portion of the outer surface of the gasket G may be in close contact with an upper surface of the beading portion 224. An inner surface of the gasket G may surround an outer surface of the support portion 234a and may be in close contact with the outer surface of the support portion 234a. A lower surface of the support portion 234a may be supported with respect to the upper surface of the beading portion 224 by the gasket G.

The battery cell 2 according to an embodiment may further include a first current collecting member 250 and a second current collecting member 260.

The first current collecting member 250 may be disposed between the cap assembly 230 and the first tab 214 of the electrode assembly 210. The first current collecting member 250 may have a plate shape that is perpendicular to the first direction. The first current collecting member 250 may be formed of a conductive material, such as copper, aluminum, nickel, etc.

A surface of the first current collecting member 250 may be electrically connected to the first tab 214. For example, a surface of the first current collecting member 250 may be in contact with the first tab 214 of the electrode assembly 210, and, in an embodiment, the first current collecting member 250 and the first tab 214 may be joined by laser welding or the like.

Another surface of the first current collecting member 250 may be electrically connected to the cap assembly 230. For example, the first current collecting member 250 may be electrically connected to the cap assembly 230 by a first connection tab 251. The first connection tab 251 may be formed of a conductive material, such as copper, aluminum, nickel, etc. The first connection tab 251 may be disposed between the first current collecting member 250 and the cap down 232. Both, or opposite, end portions of the first connection tab 251 may be connected to the first current collecting member 250 and the cap down 232, respectively. Accordingly, the cap assembly 230 according to an embodiment may be electrically connected to the first electrode plate 211 and may function as a positive electrode terminal.

However, the first current collecting member 250 is not limited thereto and, in an embodiment, may be in direct contact and connected to the cap down 232 without the first connection tab 251.

The second current collecting member 260 may be disposed between the closed portion 223 of the case 220 and the electrode assembly 210. The second current collecting member 260 may have a plate shape that is perpendicular to the first direction. The second current collecting member 260 may be formed of a conductive material, such as copper, aluminum, nickel, etc.

A surface of the second current collecting member 260 may be electrically connected to the second tab 215. For example, a surface of the second current collecting member 260 may be in contact with the second tab 215 of the electrode assembly 210, and, in an embodiment, the second current collecting member 260 and the second tab 215 may be joined by laser welding or the like.

Another surface of the second current collecting member 260 may be electrically connected to the case 220. For example, the second current collecting member 260 may be electrically connected to the case 220 by a second connection tab 261. The second connection tab 261 may be formed of a conductive material, such as copper, aluminum, nickel, etc. The second connection tab 261 may be disposed between the second current collecting member 260 and the closed portion 223. Both, or opposite, end portions of the second connection tab 261 may be connected to the second current collecting member 260 and the closed portion 223, respectively. Accordingly, the closed portion 223 according to an embodiment may be electrically connected to the second electrode plate 212 and may function as a negative electrode terminal.

However, the second current collecting member 260 is not limited thereto and, in an embodiment, may be in direct contact and connected to the closed portion 223 without the second connection tab 261.

In an embodiment, the first surface 21 of the battery cell 2 may be an outer surface of the cap up 231 disposed to face the space outside the battery cell 2, and may be an upper surface of the small diameter portion 231a based on FIG. 7. The second surface 22 of the battery cell 2 may be an outer surface of the closed portion 223 disposed to face the space outside the battery cell 2, and may be a lower surface of the closed portion 223.

Herein, a battery cell 2 according to another embodiment of the present disclosure will be described.

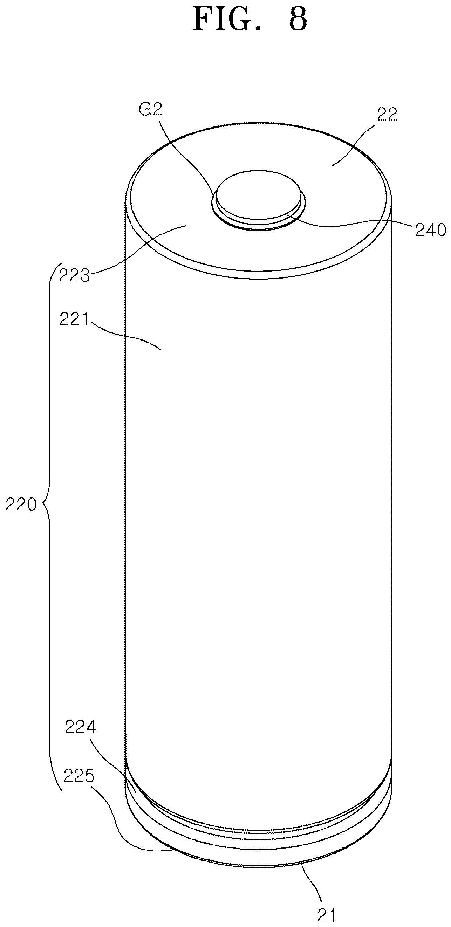

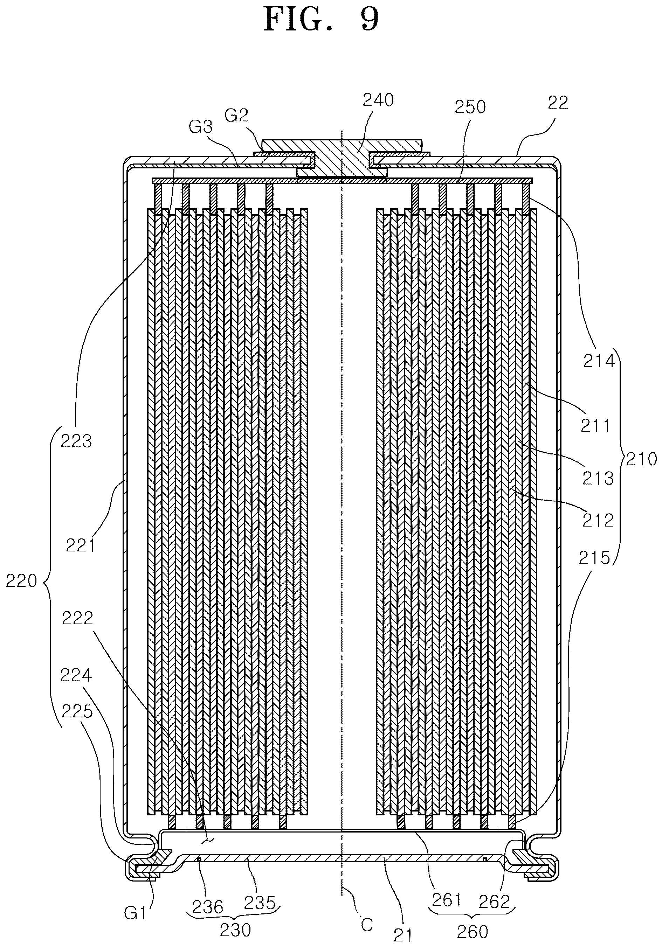

FIG. 8 is a perspective view schematically illustrating a battery cell according to another embodiment of the present disclosure; and FIG. 9 is a cross-sectional view schematically illustrating the battery cell of FIG. 8.

An electrode assembly 210 and a case 220 according to the present embodiment may be configured in the same manner as the electrode assembly 210 and the case 220 described based on FIGS. 6 and 7.

A first tab 214 according to the present embodiment may be disposed to face a closed portion 223 of the case 220, and a second tab 215 may be disposed to face an opening 222 of the case 220.

The battery cell 2 according to the present embodiment may further include a terminal 240.

The terminal 240 may be coupled to the case 220 and electrically connected to the electrode assembly 210. The terminal 240 may be formed of a metal material having electrical conductivity, for example, a material such as aluminum, nickel, copper, etc.

The terminal 240 according to an embodiment may pass through the closed portion 223 of the case 220 in the first direction. In an embodiment, the terminal 240 may be inserted into a through hole formed in a central portion of the closed portion 223. An outer circumferential surface of the terminal 240 may be disposed to be spaced by a distance (e.g., a predetermined distance) apart from an inner circumferential surface of the through hole formed in the central portion of the closed portion 223. Both, or opposite, end portions of the terminal 240 may be disposed in spaces inside and outside the case 220, respectively.

In an embodiment, both, or opposite, end portions of the terminal 240 disposed in the spaces inside and outside the case 220 may be compressed and deformed by riveting, and may be disposed to face outer and inner surfaces of the closed portion 223, respectively. In an embodiment, an edge region of the terminal 240 may have a generally U-shaped cross-sectional shape. Accordingly, the terminal 240 may be stably fixed to the case 220 while passing through the closed portion 223.

A first current collecting member 250 according to the present embodiment may be disposed between the electrode assembly 210 and the closed portion 223.

A surface of the first current collecting member 250 may be in contact with the first tab 214 of the electrode assembly 210 protruding toward the closed portion 223. In an embodiment, the first current collecting member 250 and the first tab 214 may be joined by laser welding.

Another surface of the first current collecting member 250 may be in contact with an end portion surface of the terminal 240 disposed in the inner space of the case 220. In an embodiment, the first current collecting member 250 and the terminal 240 may be joined by laser welding. Accordingly, in the present embodiment, the terminal 240 may be electrically connected to a first electrode plate 211 and may function as a positive electrode terminal.

A terminal gasket G2 for electrically insulating the terminal 240 and the case 220 may be disposed between the terminal 240 and the case 220.

The terminal gasket G2 according to an embodiment may be disposed to surround (e.g., entirely surround) an inner circumferential surface of the through hole formed in the closed portion 223 and outer and inner surfaces of the closed portion 223 facing both, or opposite, end portions of the terminal 240. Both, or opposite, surfaces of the terminal gasket G2 may be in close contact with the surfaces of the closed portion 223 and the terminal 240. The terminal gasket G2 may be formed of an insulating material, such as rubber, polyethylene (PE), polypropylene (PP), polyethylene terephthalate (PET), or the like.

A case gasket G3 for electrically insulating the electrode assembly 210 and the closed portion 223 may be disposed between the electrode assembly 210 and the closed portion 223. The case gasket G3 may electrically insulate the electrode assembly 210 and the closed portion 223 from each other by preventing or substantially preventing direct contact between the case 220 and the first electrode plate 211.

The case gasket G3 according to an embodiment may be disposed between a surface of the electrode assembly 210 from which the first tab 214 protrudes and an inner surface of the closed portion 223 disposed to face the inner space of the can 221. The case gasket G3 may be fixed to the inner surface of the closed portion 223 through an adhesive or the like. The case gasket G3 may be formed of an insulating material, such as rubber, polyethylene (PE), polypropylene (PP), polyethylene terephthalate (PET), or the like.

The cap assembly 230 according to the present embodiment may include a cap plate 235.

The cap plate 235 may be formed to have a generally circular plate shape. The cap plate 235 may be disposed inside the opening 222 of the case 220. The cap plate 235 may be disposed to face the electrode assembly 210 with a beading portion 224 interposed therebetween inside the opening 222. A surface of the cap plate 235 may be seated on the beading portion 224. Another surface of the cap plate 235 may be disposed to face a space outside the case 220.

A crimping portion 225 according to the present embodiment may be bent from the beading portion 224 and may be disposed to face the other surface of the cap plate 235 disposed to face the space outside the case 220.

A cap gasket G1 for electrically insulating the cap plate 235 and the case 220 may be disposed between the cap plate 235 and the crimping portion 225.

The cap gasket G1 according to an embodiment may be disposed to surround (e.g., entirely surround) an end portion of the cap plate 235. An outer surface of the cap gasket G1 may be pressed against and fixed to the inner surface of the beading portion 224 and the crimping portion 225. The cap gasket G1 may be formed of an insulating material, such as rubber, polyethylene (PE), polypropylene (PP), polyethylene terephthalate (PET), or the like. Accordingly, the cap gasket G1 may electrically insulate the cap plate 235 and the case 220 and block moisture, foreign materials, and the like from being introduced between the cap plate 235 and the case 220.

In an embodiment, a notch 236 may be formed in the cap plate 235 to induce a fracture operation of the cap plate 235 if the internal pressure of the case 220 increases, such as due to thermal runaway of the secondary battery.

The notch 236 according to an embodiment may have a groove shape formed to be concave from the surface of the cap plate 235 toward the inside of the cap plate 235. In an embodiment, the notch 236 may have a ring shape extending in a circumferential direction centered on the winding axis C.

A second current collecting member 260 according to the present embodiment may include a flat portion 261 disposed between the second tab 215 and the cap plate 235 and an extension portion 262 extending from the flat portion 261.

A surface of the flat portion 261 facing the electrode assembly 210 may be connected to the second tab 215. An end portion of the second tab 215 may be in contact with the flat portion 261 and, in an embodiment, may be connected to a surface of the flat portion 261 by laser welding or the like.

The extension portion 262 may extend from an edge of the flat portion 261 toward the cap plate 235. The extension portion 262 may be in contact with the inner surface of the beading portion 224. In an embodiment, the extension portion 262 may be rounded or bent along the beading portion 224. The extension portion 262 may be connected to the beading portion 224 by welding or the like. Accordingly, the case 200 and the second electrode plate 212 may be electrically connected to each other, and the closed portion 223 may function as a negative electrode terminal.

In an embodiment, a plurality of extension portions 262 may be formed. The plurality of extension portions 262 may be disposed to be spaced apart from each other along the edge of the flat portion 261.

In the present embodiment, a first surface 21 of the battery cell 2 may be an outer surface of the cap plate 235 disposed to face the space outside the battery cell 2, and as a lower surface of the cap plate 235 based on FIG. 9. A second surface 22 of the battery cell 2 may be an outer surface of the closed portion 223 disposed to face the space outside the battery cell 2, and an upper surface of the closed portion 223 based on FIG. 9.

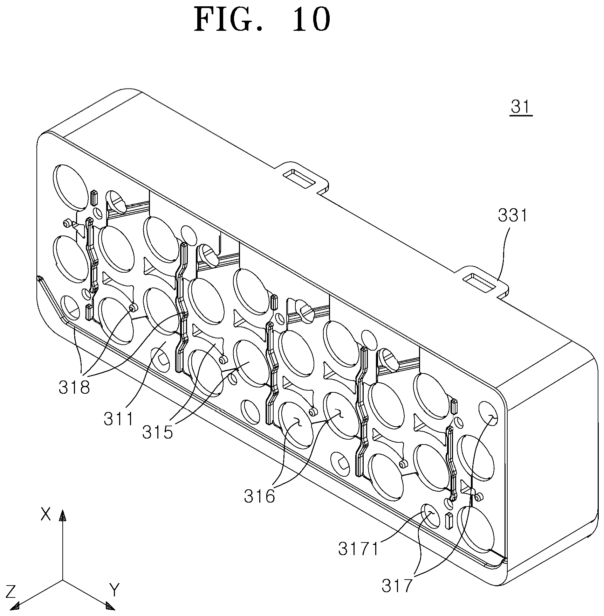

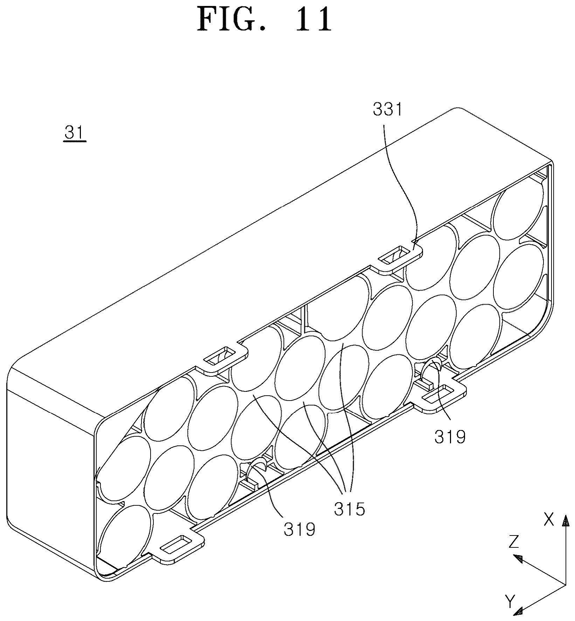

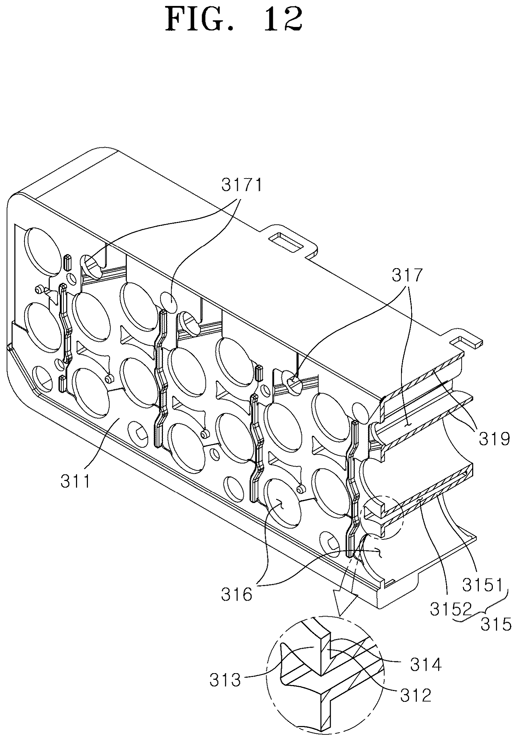

FIG. 10 is a perspective view schematically illustrating a first holder according to an embodiment of the present disclosure; FIG. 11 is a perspective view schematically illustrating the first holder of FIG. 10 in a direction different from that of FIG. 10, and FIG. 12 is a cross-sectional view of FIG. 10.

Referring to FIGS. 10 to 12, the first holder 31 according to an embodiment of the present disclosure may include a first holder main body 311, a first hole 316, a second hole 317, a first protrusion 318, and a first pipe guide 319.

The first holder main body 311 may have a generally plate shape so as to come into contact with the flat first surfaces 21 of the battery cells 2. The first holder main body 311 may have rigidity capable of supporting the battery cells 2 in the first direction while in contact with the first surfaces 21 of the battery cells 2.

The first holder main body 311 according to an embodiment of the present disclosure may include a first support plate 312, a first outer surface 313, a first inner surface 314, and a first partition wall 315.

The first support plate 312 may be formed to extend in the arrangement direction of the battery cells 2. The battery cells 2 may be disposed in the left-right direction (Y direction) and may be disposed to be stacked in the up-down direction (X direction). The first support plate 312 may have a plate shape having a width in the left-right direction (Y direction) and a width in the up-down direction (X direction).

The first outer surface 313 may be formed on a surface of the first support plate 312 facing the housing 1. The first outer surface 313 may form at least a portion of the exterior of the first holder 31 in a state in which the battery cells 2 are supported by the first holder 31. A first dispersion space 5 in which flames emitted from any one of the battery cells 2 may be dispersed may be formed between the first outer surface 313 and the housing 1.

The first inner surface 314 may be formed on a surface of the first support plate 312 facing the battery cells 2. The first inner surface 314 may be in close contact with the first surfaces 21 of the battery cells 2. The first inner surface 314 is in close contact with the first surface 21 to prevent or substantially prevent the flames in the first dispersion space 5 from flowing into a gap between adjacent battery cells 2 and the first holder 31.

The first partition wall 315 protrudes from the first inner surface 314 toward the battery cells 2 in the first direction (e.g., the -Z direction) and may come into contact with the side surfaces of the battery cells 2. In the description of the present disclosure, the side surface of the battery cell 2 may include an outer surface located between the first surface 21 facing the front (+Z direction) and the second surface 22 facing the rear (-Z direction). The side surface of the battery cell 2 may have a cylindrical or polygonal barrel shape.

The first partition wall 315 according to an embodiment of the present disclosure may include a partition wall main body 3151 and a partition wall groove 3152.

The partition wall main body 3151 may be formed to protrude from a position corresponding to the gap between the battery cells 2 of the first holder main body 311. The partition wall main body 3151 may be formed to surround the side surface of the battery cell 2 at a position where the partition wall main body 3151 may contact the side surface of the battery cell 2. The partition wall main body 3151 may support the side surfaces of the battery cells 2 in various directions. An inner space having a cylindrical or polygonal barrel shape each corresponding to the side surfaces of the battery cells 2 may be formed between the partition wall main bodies 3151.

A partition wall may be formed between the battery cells 2 by the partition wall main body 3151 to prevent or substantially prevent direct air flow between the battery cells 2 and heat transfer (e.g., flames). By forming the partition wall main body 3151, flames emitted from one battery cell 2 are blocked by the partition wall main body 3151 and may not flow and propagate to other adjacent battery cells 2, and may have only a flow path that passes through the first holder main body 311 and heads toward the outside of the first holder 31. For example, the flames emitted forward (+Z direction) from the first surface 21 of one of the battery cells 2 may be blocked by the partition wall main body 3151 and may not flow in the up-down direction (X direction) and the left-right direction (Y direction), and may only flow forward through the first holder main body 311.

The partition wall main body 3151 may be in close contact with the side surfaces of the battery cells 2. The partition wall main body 3151 is in close contact with the side surfaces of the battery cells 2 to prevent or substantially prevent the flames emitted from the first surface 21 of the battery cell 2 from flowing into the gap between the partition wall main body 3151 and the side surfaces of the battery cells 2.

The partition wall groove 3152 may be formed to be hollow inside the partition wall main body 3151. The partition wall groove 3152 may be recessed toward the partition wall main body 3151 from the first holder main body 311. The partition wall main body 3151 may protrude rearward (-Z direction) from the first holder main body 311, and the partition wall groove 3152 may be recessed and extended rearward (-Z direction) in the protruding and extending direction of the partition wall main body 3151 from the first holder main body 311.

As the partition wall groove 3152 is formed inside the partition wall main body 3151, the partition wall main body 3151 may have a shape of an empty shell inside. The partition wall main body 3151 may have a thin shell shape and may have elasticity. In an embodiment, the partition wall groove 3152 may be configured as a hollow in the partition wall main body 3151 such that the partition wall main body 3151 elastically contacts the battery cell 2. Accordingly, when the battery cell 2 is inserted into the partition wall main body 3151, the partition wall main body 3151 may be elastically pressed against the side surface of the battery cell 2.

A width of the partition wall groove 3152 may be elastically expanded and varied according to a contact pressure between the partition wall main body 3151 and the battery cell 2. The partition wall main body 3151 is elastically pressed against the side surface of the battery cell 2, thereby hermetically blocking the flames from flowing into a gap between the partition wall main body 3151 and the side surfaces of the battery cells 2. In addition, the portion of the first partition wall 315 that supports the side surface of the battery cell 2 where the flames occur may buffer an explosive power of the flames by elastic force.

In addition, when the flames are dispersed in the first dispersion space 5, some of the flames may flow into a plurality of partition wall grooves 3152. Since the flames flowing into the partition wall groove 3152 consume kinetic energy due to eddy currents and stagnation inside the partition wall groove 3152 as described above, an impact force due to the flames may be alleviated by the partition wall groove 3152.

The partition wall main body 3151 located between the battery cells 2 may have a shape of which a width becomes narrower as the partition wall main body 3151 is farther away from the first holder main body 311. For example, the partition wall main body 3151 may have a shape of which a width becomes narrower toward the rear (-Z direction), and the space formed between the partition wall main bodies 3151 gradually expands toward the rear, making it easier to assemble the battery cell 2 between the partition wall main bodies 3151 from the rear.

The partition wall groove 3152 may correspond to the partition wall main body 3151 and have a shape of which a width becomes smaller toward the rear. According to the shape of the partition wall groove 3152, since the flames naturally receive greater resistance as the flames progress toward the rear along the inside of the partition wall groove 3152, an impact force caused by the flames may be more stably alleviated.

A plurality of first holes 316 may be formed to pass through at positions corresponding to the battery cells 2 of the first holder main body 311. At least a portion of the first surface 21 of the battery cell 2 may be exposed to the housing 1 through the first hole 316. The flames emitted from the first surface 21 may pass through the first holder main body 311 through the first hole 316 and flow into the first dispersion space 5.

A plurality of second holes 317 may be formed to pass through at positions spaced apart from the first hole 316 in the first holder main body 311. A flame pipe 4 may be installed in the second hole 317. The second hole 317 may form a path through which the flames in the first dispersion space 5 may flow into the flame pipe 4. A first pipe coupling portion 3171 to which the open first end portion of the flame pipe 4 is coupled may be formed at an edge portion of the second hole 317.

The flame pipe 4 may have two openings corresponding to an inlet through which the flames flow in and an outlet through which the flames flow out, and the two openings may be referred to as a first end portion and a second end portion. When the flame pipe 4 is disposed to extend in the front-rear direction, the first end portion and the second end portion may be located at a front end portion and a rear end portion of the flame pipe 4, respectively.

When the first holder 31 is disposed in front (+Z direction) of the second holder 32, the open front end portion of the flame pipe 4 may be coupled to the second hole 317. The flames in the first dispersion space 5 may flow into the flame pipe 4 through the second hole 317. The front end portion of the flame pipe 4 may be formed with a first holder coupling portion 46 (described below) coupled to the first pipe coupling portion 3171.

The first pipe coupling portion 3171 may have a width and shape corresponding to the first end portion of the flame pipe 4 and may be in close contact with a circumference of the flame pipe 4. The first pipe coupling portion 3171 may have a contact area proportional to a thickness of the first holder main body 311 and may be in contact with the circumference of the flame pipe 4. Accordingly, the flames may be hermetically blocked in the first dispersion space 5 from flowing into the gap between the first holder 31 and the flame pipe 4.

The first protrusion 318 may be formed to protrude from the first outer surface 313 toward the housing 1. The first protrusions 318 may be disposed in a dispersed manner at a plurality of locations throughout the first outer surface 313. By forming the first protrusion 318, a gap corresponding to the protrusion height of the first protrusion 318 may be secured between the first holder 31 and the housing 1. By this gap, the first dispersion space 5 may be formed with a first width D1 corresponding to a protrusion height of the first protrusion 318. In an embodiment, the first width D1 may be 5.0 mm or at least 4.0 mm.

The first pipe guide 319 may be formed to extend in a direction parallel to the protrusion direction of the first partition wall 315 from the edge portion of the second hole 317. The first pipe guide 319 may be formed to extend from the first holder main body 311 toward the second holder 32. In an embodiment, the first pipe guide 319 may extend from an edge of the second hole 317 toward the second holder 32. In an embodiment, the first pipe guide 319 may be formed to protrude in a rib structure from the first partition wall 315 toward a circumference (side surface) of the flame pipe 4. The first pipe guide 319 may be in contact with the circumference (side surface) of the flame pipe 4.

In an embodiment, the flame pipe 4 may not only be supported at the open first end portion by the first pipe coupling portion 3171 but may also be supported at the circumference by the first pipe guide 319. For example, while the first end portion of the flame pipe 4 facing the front (+Z direction) is coupled to the first pipe coupling portion 3171, the circumference of the flame pipe 4 may be restricted from moving in the up-down direction (X direction) and left-right direction (Y direction) by coming into contact with the first pipe guide 319.

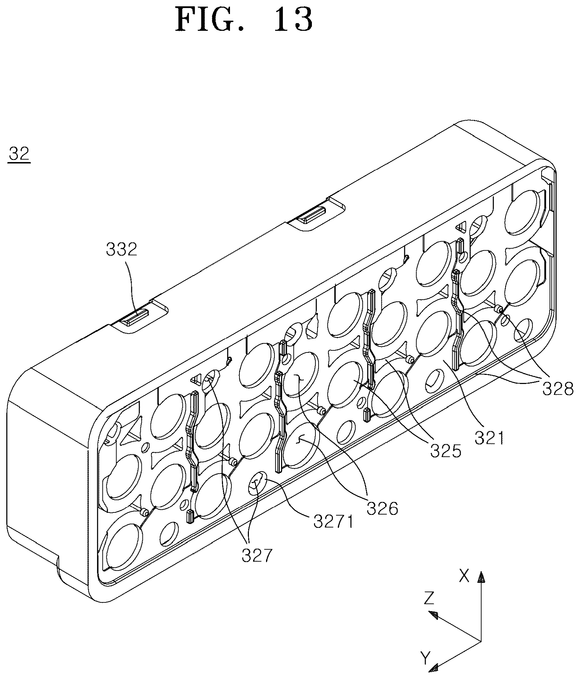

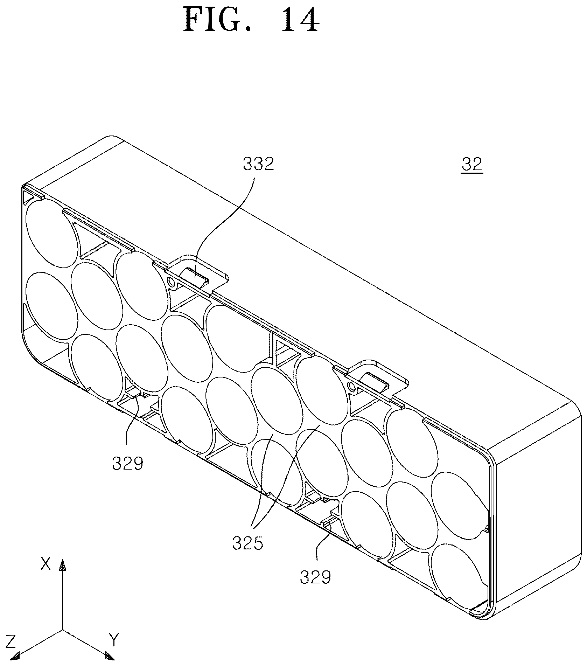

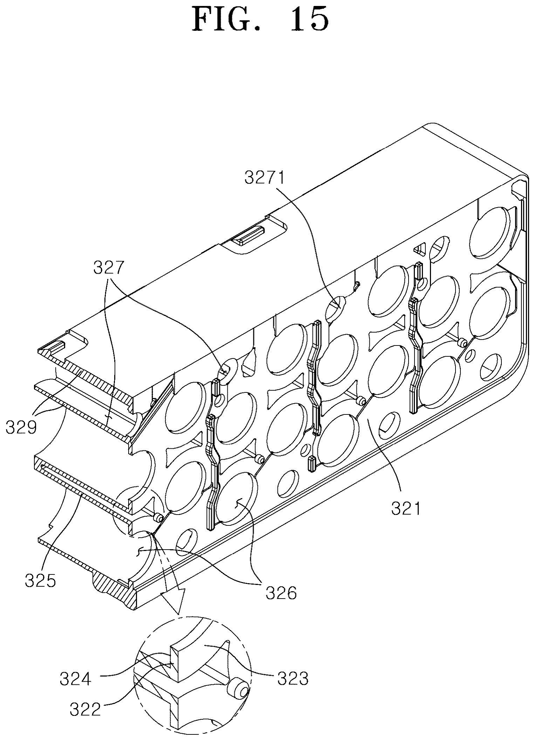

FIG. 13 is a perspective view schematically illustrating a second holder according to an embodiment of the present disclosure; FIG. 14 is a perspective view schematically illustrating the second holder of FIG. 13 in a direction different from that of FIG. 13; and FIG. 15 is a cross-sectional view of FIG. 13.

Referring to FIGS. 13 to 15, the second holder 32 according to an embodiment of the present disclosure may include a second holder main body 321, a third hole 327, a fourth hole 326, a second protrusion 328, and a second pipe guide 329.

The second holder main body 321 may be disposed to face the first holder 31 in the first direction (Z direction). In an embodiment, the second holder main body 321 may have a structure corresponding to or symmetrical to the first holder main body 311 as a whole. The second holder main body 321 may have a generally plate shape so as to come into contact with flat second surfaces 22 of the battery cells 2. The second holder main body 321 may have rigidity capable of supporting the battery cells 2 in the first direction while in contact with the second surfaces 22 of the battery cells 2.

The second holder main body 321 according to an embodiment of the present disclosure may include a second support plate 322, a second outer surface 323, a second inner surface 324, and a second partition wall 325.

The second support plate 322 may be formed to extend in the arrangement direction of the battery cells 2. The battery cells 2 may be disposed in the left-right direction (Y direction) and may be disposed to be stacked in the up-down direction (X direction). The second support plate 322 may have a plate shape having a width in the left-right direction (Y direction) and a width in the up-down direction (X direction).

The second outer surface 323 may be formed on a surface of the second support plate 322 facing the housing 1. The second outer surface 323 may form at least a portion of the exterior of the second holder 32 in a state in which the battery cells 2 are supported by the second holder 32. A second dispersion space 6 in which the flames passing through the flame pipe 4 may be dispersed may be formed between the second outer surface 323 and the housing 1.

The second inner surface 324 may be formed on a surface of the second support plate 322 facing the battery cells 2. The second inner surface 324 may be in close contact with the second surfaces 22 of the battery cells 2. The second inner surface 324 is in close contact with the second surface 22 to prevent or substantially prevent the flames in the second dispersion space 6 from flowing into a gap between adjacent battery cells 2 and the second holder 32.

The second partition wall 325 protrudes from the second inner surface 324 toward the battery cells 2 in the first direction (e.g., the +Z direction) and may come into contact with the side surfaces of the battery cells 2. The first partition wall 315 according to an embodiment of the present disclosure may include the partition wall main body 3151 and the partition wall groove 3152, and the second partition wall 325 may have a structure corresponding to or symmetrical to the first partition wall 315 as a whole. The first partition wall 315 according to an embodiment of the present disclosure may include the partition wall main body 3151 and the partition wall groove 3152, and the second partition wall 325 may include components corresponding to the partition wall main body 3151 and the partition wall groove 3152.

The second partition wall 325 may be formed to protrude from a position corresponding to a gap between the battery cells 2 of the second holder main body 321. In addition, the second partition wall 325 may be formed to surround the side surface of the battery cell 2 at a position where the second partition wall 325 may contact the side surface of the battery cell 2. The second partition wall 325 may support the side surfaces of the battery cells 2 in various directions. An inner space having a cylindrical or polygonal barrel shape each corresponding to the side surfaces of the battery cells 2 may be formed between the second partition walls 325.

A partition wall may be formed between the battery cells 2 by the second partition wall 325 to prevent or substantially prevent direct air flow between the battery cells 2 and heat transfer (e.g., flames). By forming the second partition wall 325, the flames emitted from one battery cell 2 are blocked by the second partition wall 325 and may not flow and propagate to other adjacent battery cells 2, and may have only a flow path that passes through the second holder main body 321 and heads toward the outside of the second holder 32. For example, the flames emitted rearward (-Z direction) from the second surface 22 of one of the battery cells 2 may be blocked by the second partition wall 325 and may not flow in the up-down direction (X direction) and the left-right direction (Y direction), and may only flow rearward through the second holder main body 321.

The second partition wall 325 may be in close contact with the side surfaces of the battery cells 2. The second partition wall 325 is in close contact with the side surfaces of the battery cells 2 to prevent or substantially prevent the flames emitted from the second surface 22 of the battery cell 2 from flowing into the gap between the second partition wall 325 and the side surfaces of the battery cells 2.

A groove (not shown) corresponding to the partition wall groove 3152 of the first partition wall 315 may be formed in the second partition wall 325. As the inside of the second partition wall 325 is formed to be hollow by such a groove, the second partition wall 325 may have a shape of a shell having an inner space. The second partition wall 325 may have a thin shell shape and may have elasticity. Accordingly, when the battery cell 2 is inserted into the second partition wall 325, the second partition wall 325 may be elastically pressed against the side surface of the battery cell 2. A width of the second partition wall 325 may be elastically expanded and varied according to the contact pressure with the battery cell 2. The second partition wall 325 is elastically pressed against the side surface of the battery cell 2, thereby hermetically blocking the flames from flowing into a gap between the second partition wall 325 and the side surfaces of the battery cells 2.

In addition, when the flames are dispersed in the second dispersion space 6, some of the flames may flow into a plurality of second partition walls 325. Since the flames flowing into the groove of the second partition wall 325 consume kinetic energy due to eddy currents and stagnation inside the groove as described above, an impact force due to the flames may be alleviated by the groove.

The second partition wall 325 located between the battery cells 2 may have a shape of which a width becomes smaller as the second partition wall 325 is farther away from the second holder main body 321. For example, the second partition wall 325 may have a shape of which a width becomes narrower toward the front (+Z direction), and the space formed between the second partition walls 325 gradually expands toward the front, making it easier to assemble the battery cell 2 between the second partition walls 325 from the front.

The groove of the second partition wall 325 may correspond to the width of the second partition wall 325 and have a shape of which a width becomes smaller toward the front side. According to a shape of the groove of the second partition wall 325, since the flames naturally receive greater resistance as the flames progress toward the front along the inside of the groove of the second partition wall 325, an impact force caused by the flames may be more stably alleviated.

A plurality of third holes 327 may be formed to pass through at positions corresponding to the second holes 317 in the second holder main body 321. The flame pipe 4 may be installed in the third hole 327. The third hole 327 may form a path through which the flames passing through the flame pipe 4 flow into the second dispersion space 6. A second pipe coupling portion 3271 to which the open second end portion (rear end portion) of the flame pipe 4 is coupled may be formed at an edge portion of the third hole 327.

When the second holder 32 is disposed at the rear (-Z direction) of the first holder 31, the open rear end portion of the flame pipe 4 may be coupled to the third hole 327. The flames in the second dispersion space 6 may flow into the flame pipe 4 through the third hole 327. The rear end portion of the flame pipe 4 may be formed with a second holder coupling portion 47 (described below) coupled to the second pipe coupling portion 3271.

The second pipe coupling portion 3271 has a width and shape corresponding to the second end portion of the flame pipe 4 and may be in close contact with the circumference of the flame pipe 4. The second pipe coupling portion 3271 may have a contact area proportional to a thickness of the second holder main body 321 and may be in contact with the circumference of the flame pipe 4. Accordingly, flames may be hermetically blocked in the second dispersion space 6 from flowing into the gap between the second holder 32 and the flame pipes 4.

A plurality of fourth holes 326 may be formed to pass through at positions corresponding to the battery cells 2 of the second holder main body 321. At least a portion of the second surface 22 of the battery cell 2 may be exposed to the housing 1 through the fourth hole 326. The flames emitted from the second surface 22 may pass through the second holder main body 321 through the fourth hole 326 and flow into the second dispersion space 6.

The second protrusion 328 may be formed to protrude from the second outer surface 323 toward the housing 1. The second protrusions 328 may be disposed in a dispersed manner at a plurality of locations throughout the second outer surface 323. By forming the second protrusion 328, a gap corresponding to the protrusion height of the second protrusion 328 may be secured between the second holder 32 and the housing 1. By this gap, the second dispersion space 6 may be formed with a second width D2 corresponding to a protrusion height of the second protrusion 328. In an embodiment, the second width D2 may be 5.0 mm or at least 4.0 mm.

The second pipe guide 329 may be formed to extend in a direction parallel to the protrusion direction of the second partition wall 325 from an edge portion of the third hole 327. The second pipe guide 329 may be formed to protrude from the second holder main body 321 toward the first holder 31. In an embodiment, the second pipe guide 329 may extend from an edge of the third hole 327 towards the first holder 31.The second pipe guide 329 may be formed to protrude in a rib structure from the second partition wall 325 toward the circumference (side surface) of the flame pipe 4. The second pipe guide 329 may be in contact with the circumference (side surface) of the flame pipe 4.

The flame pipe 4 may not only be supported at the open second end portion (rear end portion) by the second pipe coupling portion 3271 but may also be supported at the circumference by the second pipe guide 329. For example, while the second end portion of the flame pipe 4 facing the rear (-Z direction) is coupled to the second pipe coupling portion 3271, the circumference of the flame pipe 4 may be restricted from moving in the up-down direction (X direction) and left-right direction (Y direction) by coming into contact with the second pipe guide 329.

The first holder 31 and the second holder 32 may be fastened to each other by a fastening part 33. In an embodiment, the fastening part 33 may have a structure in which a ring 331 and a hook 332 are snap-fitted. In an embodiment, a plurality of rings 331 may be formed on a side of the first holder 31 and the second holder 32 and a plurality of hooks 332 may be formed on another side of the first holder 31 and the second holder 32. The plurality of rings 331 and hooks 332 may be disposed along edges of the first holder 31 and the second holder 32 and may be disposed on a side of each of the first holder 31 and the second holder 32 and an opposite side thereof. For example, the plurality of rings 331 and hooks 332 may be disposed at upper and lower sides of the first holder 31 and the second holder 32.

With the first holder 31 and the second holder 32 coupled to each other by the fastening part 33, the first partition wall 315 of the first holder 31 and the second partition wall 325 of the second holder 32 may face each other and come into contact in the first direction (Z direction). Additionally, the first pipe guide 319 and the second pipe guide 329 may face each other and come into contact in the first direction (Z direction) while the first holder 31 and the second holder 32 are mutually coupled by the fastening part 33.

In an embodiment, when the other side of the first holder 31 and the other side of the second holder 32 are fastened by the fastening part 33 after the battery cells 2 are mounted on a side of each of the first holder 31 and the second holder 32, the first holder 31 and the second holder 32 may be integrally coupled while the plurality of battery cells 2 are mounted therein. The fastening part 33 is not limited to a snap-fit fastening structure including the ring 331 and the hook 332, and is not limited to a specific structure and shape as long as the first holder 31 and the second holder 32 can be fastened to each other.

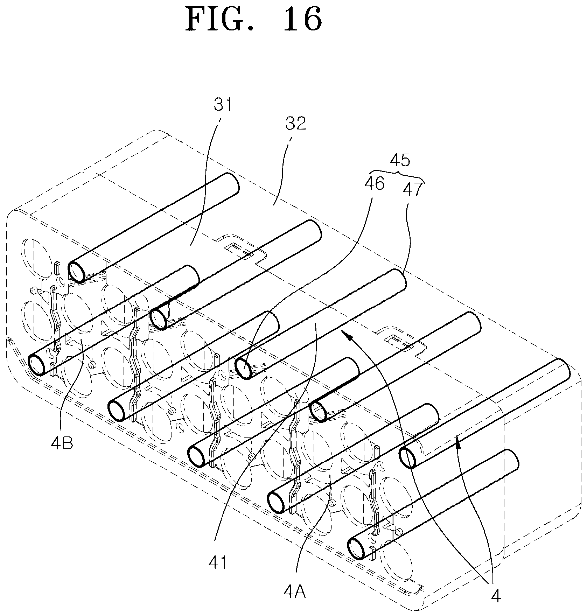

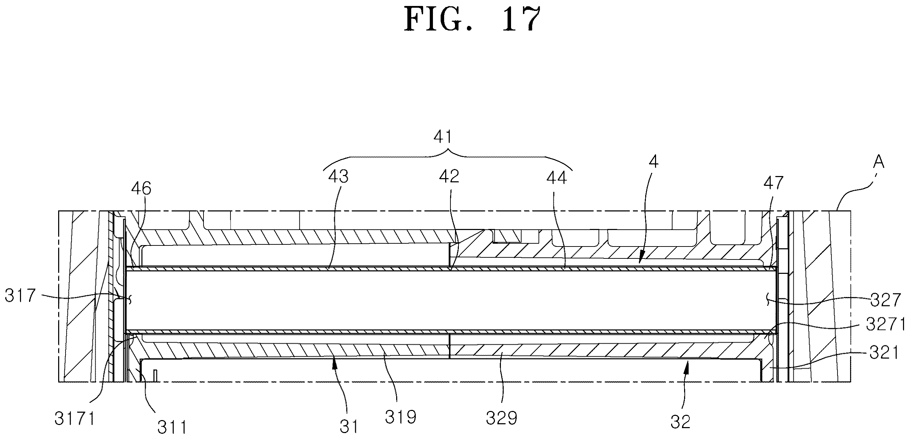

FIG. 16 is a perspective view schematically illustrating an installation structure of the flame pipe according to an embodiment of the present disclosure, and FIG. 17 is an enlarged view of a region "A" of FIG. 2.

Referring to FIGS. 2, 16, and 17, a plurality of flame pipes 4 may be disposed in parallel between the battery cells 2. The flame pipe 4 may have an extension length equal to a width of the holder 3. For example, the battery cells 2 and the flame pipes 4 may be disposed to extend in the front-rear direction (Z direction), and the flame pipe 4 may have a same extension length as a width of the holder 3 in the front-rear direction.

According to an embodiment of the present disclosure, a plurality of flame pipes 4 including a first flame pipe 4A and a second flame pipe 4B may be provided.

The first flame pipe 4A may guide a part of the flames in the first dispersion space 5 to the second dispersion space 6. The second flame pipe 4B may be disposed spaced apart from the first flame pipe 4A and may guide another part of the flames in the first dispersion space 5 to the second dispersion space 6. In addition, the first flame pipe 4A and the second flame pipe 4B may guide the flames in the second dispersion space 6 to the first dispersion space 5 at a position spaced apart from each other.

The flames in the first dispersion space 5 may be dispersed and flow into the plurality of flame pipes 4 and may be dispersed again in the second dispersion space 6 after passing through the flame pipes 4 at a plurality of locations. Further, the flames in the second dispersion space 6 may be dispersed and flow into the plurality of flame pipes 4, and may be dispersed again in the first dispersion space 5 after passing through the flame pipes 4. By this action, if the battery cell 2 ignites, the flames may be evenly and quickly dispersed over the entire space formed between the housing 1 and the holder 3.

The flame pipe 4 according to an embodiment of the present disclosure may include a pipe main body 41 and a holder coupling portion 45.

The pipe main body 41 may have a hollow tube shape and may be disposed in parallel with the battery cells 2. The pipe main body 41 may be disposed to cross between the first holder 31 and the second holder 32. The flame pipe 4 may be disposed to cross between the first pipe coupling portion 3171 and the second pipe coupling portion 3271. The flame pipe 4 may be disposed to cross between the first pipe guide 319 and the second pipe guide 329.

The pipe main body 41 according to an embodiment of the present disclosure may include a first pipe portion 42, a second pipe portion 43, and a third pipe portion 44.

The first pipe portion 42 is a device portion corresponding to a middle portion of the pipe main body 41 in the longitudinal direction and may be disposed to cover the space between the first holder 31 and the second holder 32. The first pipe portion 42 may be disposed to cross between the first pipe coupling portion 3171 and the second pipe coupling portion 3271. The first pipe portion 42 may be disposed to cross between the first pipe guide 319 and the second pipe guide 329.

The second pipe portion 43 is a device portion of the pipe main body 41 disposed inside the first holder 31 and may be formed to extend from the first pipe portion 42 to the first holder 31 side. A first holder coupling portion 46 (described below) may be formed at an end portion (first end portion) of the second pipe portion 43.

The third pipe portion 44 is a device portion of the pipe main body 41 disposed inside the second holder 32 and may be formed to extend from the first pipe portion 42 to the second holder 32 side. A second holder coupling portion 47 (described below) may be formed at an end portion (second end portion) of the third pipe portion 44.

The flame pipe 4 may be installed to cover a gap between the first holder 31 and the second holder 32, for example, between the first pipe guide 319 and the second pipe guide 329. Accordingly, compared to a case in which the flame flow path is formed only by the first holder 31 and the second holder 32 without the flame pipe 4, the flames entering the inside of the first holder 31 or the second holder 32 through the second hole 317 or the third hole 327 may be prevented or substantially prevented from leaking through a gap between the first holder 31 and the second holder 32 and damaging the battery cells 2.

The holder coupling portions 45 may be formed at both, or opposite, end portions of the pipe main body 41 and coupled to the holder 3. When the pipe main body 41 is disposed to extend forward and rearward, the holder coupling portions 45 may be located at the open front end portion and rear end portion of the pipe main body 41.

The holder coupling portions 45 according to an embodiment of the present disclosure may include the first holder coupling portion 46 and the second holder coupling portion 47.

The first holder coupling portion 46 may be formed at the first end portion of the pipe main body 41. The first holder coupling portion 46 may be coupled by passing through the second hole 317 of the first holder 31 and may be tightly coupled and fixed to the first pipe coupling portion 3171 formed at the edge portion of the second hole 317.

The second holder coupling portion 47 may be formed at the second end portion of the pipe main body 41. The second holder coupling portion 47 may be coupled by passing through the third hole 327 of the second holder 32 and may be tightly coupled and fixed to the second pipe coupling portion 3271 formed at the edge portion of the third hole 327.

As a material of the flame pipe 4, a material having better flame resistance performance than the first holder 31 and the second holder 32 may be applied. In an embodiment, the flame pipe 4 may include a metal material, such as SUS, having a high melting point. Accordingly, by assembling the flame pipe 4 into the second hole 317 and the third hole 327 of the holder 3, the flame path formed by the second hole 317 and the third hole 327 of the holder 3 may be prevented from being melted and blocked by the flames and stable flame resistance performance against the flames may be secured. In an embodiment, the flame pipe 4 may have a diameter of at least 4.0 mm.

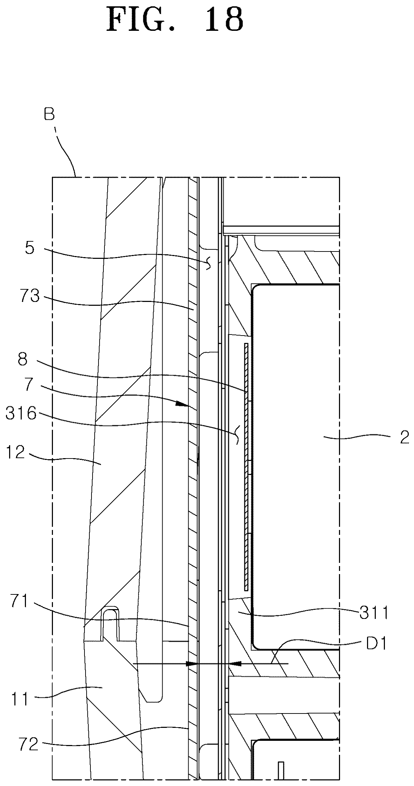

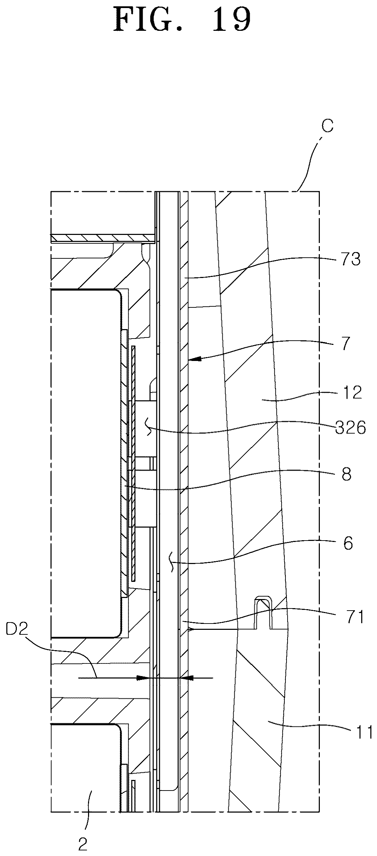

FIG. 18 is an enlarged view of a region "B" of FIG. 2 schematically illustrating an installation structure of the first flame-retardant sheet and the second flame-retardant sheet according to an embodiment of the present disclosure; and FIG. 19 is an enlarged view of a region "C" of FIG. 2.

Referring to FIGS. 2, 18, and 19, the first flame-retardant sheet 7 according to an embodiment of the present disclosure may include a first cover portion 71, a second cover portion 72, and a third cover portion 73.

The first cover portion 71 is a device portion corresponding to a middle portion of the first flame-retardant sheet 7 and may cover a coupling portion between the first housing body 11 and the second housing body 12. When the first housing body 11 is located at a lower side (-X direction) of the second housing body 12, the coupling portion between the first housing body 11 and the second housing body 12 may be located in the middle portion of the up-down direction of the housing 1. In this case, the first cover portion 71 may correspond to the middle portion of the up-down direction of the first flame-retardant sheet 7, which is a position corresponding to the coupling portion between the first housing body 11 and the second housing body 12.

The second cover portion 72 of the first flame-retardant sheet 7 is a device portion covering the first housing body 11 and may be formed to extend from the first cover portion 71 to the first housing body 11 side. The second cover portion 72 may be attached to the inner surface of the first housing body 11 or may be coupled in various ways.

The third cover portion 73 of the first flame-retardant sheet 7 is a device portion covering the second housing body 12 and may be formed to extend from the first cover portion 71 to the second housing body 12 side. The third cover portion 73 may be attached to the inner surface of the second housing body 12 or may be coupled in various ways.

The flames may be emitted from the first surface 21 or the second surface 22 of the battery cell 2. One of a plurality of first flame-retardant sheets 7 may be disposed between the first holder 31 supporting the first surface 21 and the front surface (inner surface) of the housing 1. Another of the first flame-retardant sheets 7 may be disposed between the second holder 32 supporting the second surface 22 and the rear surface (inner surface) of the housing 1. The first flame-retardant sheets 7 may be coupled to the front surface (inner surface) and the rear surface (inner surface) of the housing 1 facing the first surface 21 and the second surface 22.

By arranging the first flame-retardant sheets 7 at positions facing the first surface 21 and the second surface 22 of the battery cells 2 and covering the coupling portion between the first housing body 11 and the second housing body 12 with the first flame-retardant sheet 7, flames emitted from the first surface 21 or the second surface 22 of the battery cell 2 may be prevented or substantially prevented from flowing out through the coupling portion between the first housing body 11 and the second housing body 12.

By preventing or substantially preventing the housing 1 from being melted by the flames or the flames from flowing out through the gap of the housing 1 by the first flame-resistant sheet 7 including a flame-retardant material, the space in which the flames may flow and be dispersed between the housing 1 and the holder 3 may be stably secured, that is, the first dispersion space 5 and the second dispersion space 6 may be stably secured.

The second flame-retardant sheet 8 may cover outer surfaces of the battery cells 2 exposed to the outside of the holder 3. The second flame-retardant sheet 8 may include a flame-retardant material and may be attached to the battery cell 2 or the holder 3. In an embodiment, an adhesive sheet may be applied as the second flame-retardant sheet 8. The second flame-retardant sheet 8 may have a width and a shape that may cover at least a portion of the first surface 21 and the second surface 22.

In an embodiment, the second flame-retardant sheet 8 may have a smaller size than the first hole 316 and the fourth hole 326. In a state in which the first holder 31, the second holder 32, and the battery cells 2 are combined, the second flame-retardant sheet 8 may be attached to the first and second surfaces 21 and 22 of the battery cells 2 through the first and fourth holes 316 and 326.

In an embodiment, the second flame-retardant sheet 8 may be formed by cutting a part of the adhesive sheet. The second flame-retardant sheet 8 may be formed by forming a cut line on the adhesive sheet and cutting and separating it from the adhesive sheet. When a cut line is formed in a shape corresponding to the second flame-retardant sheet 8 at a position corresponding to the first hole 316 and the fourth hole 326 of the adhesive sheet, the sheet member is positioned in contact with the first holder main body 311 and the second holder main body 321, and an inner area of the cut line is pressed toward the first surface 21 and the second surface 22 to be cut and separated from the sheet member, so that a plurality of second flame-retardant sheets 8 may be easily combined and attached to the plurality of first surfaces 21 and second surfaces 22.

In an embodiment, each of the first hole 316 and the fourth hole 326 has a circular shape, and each of the second flame-retardant sheets 8 may have a generally fan shape or semicircular shape. An electrical connection between the battery cell 2 and the bus bar (not shown) or the vent of the battery cell 2 may be formed without interference with the second flame-retardant sheet 8 by a portion that is not covered by the second flame-retardant sheet 8.

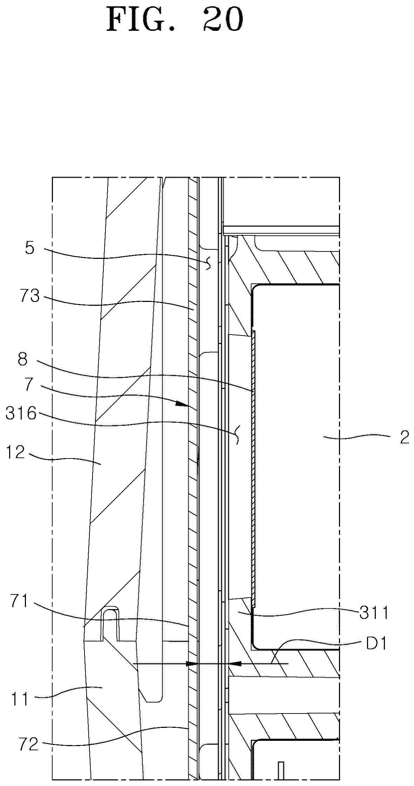

FIG. 20 is a cross-sectional view schematically illustrating an installation structure of the second flame-retardant sheet according to another embodiment of the present disclosure.

Referring to FIG. 20, the second flame-retardant sheet 8 may have a greater width than the first hole 316 and the fourth hole 326. In a state in which the second flame-retardant sheets 8 are attached to the first surface 21 and the second surface 22 of the battery cells 2, the first holder 31 and the second holder 32 may be coupled to each other by the fastening part 33 to combine the first holder 31, the second holder 32, and the battery cells 2.

When the second flame-retardant sheet 8 has a greater width than the first hole 316 and the fourth hole 326, the edges of the second flame-retardant sheets 8 may be covered by the first holder main body 311 and the second holder main body 321, and may be pressed toward the first surface 21 and the second surface 22. Accordingly, the installation of the second flame-retardant sheet 8 may be performed stably. In addition, the second flame-retardant sheets 8 may seal the gap between the first holder main body 311 and the first surface 21 and the gap between the second holder main body 321 and the second surface 22 and add a flame-retardant function at the same time. Accordingly, the flames in the first dispersion space 5 and the second dispersion space 6 may be prevented or substantially prevented from flowing into the gap between the battery cells 2 and the holder 3 through the first hole 316 and the fourth hole 326.

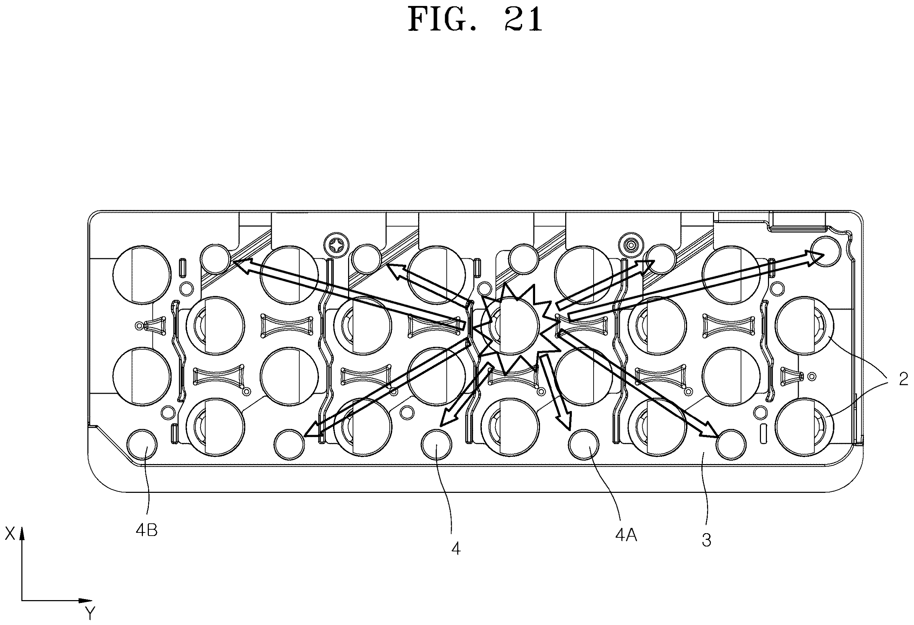

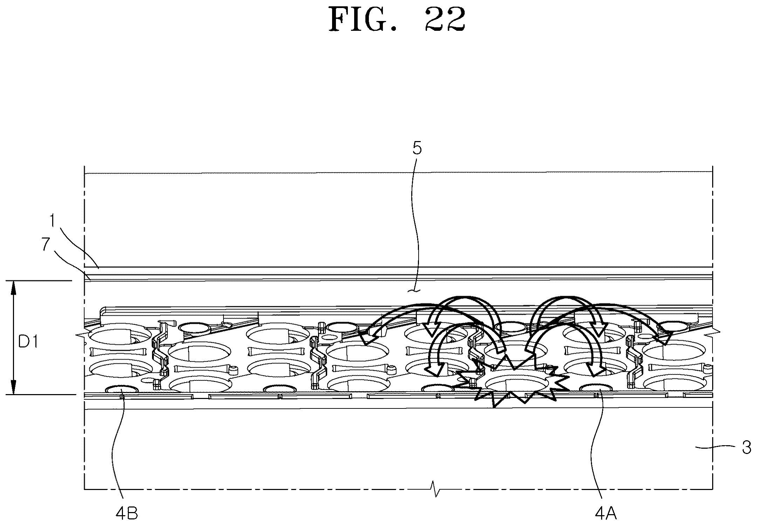

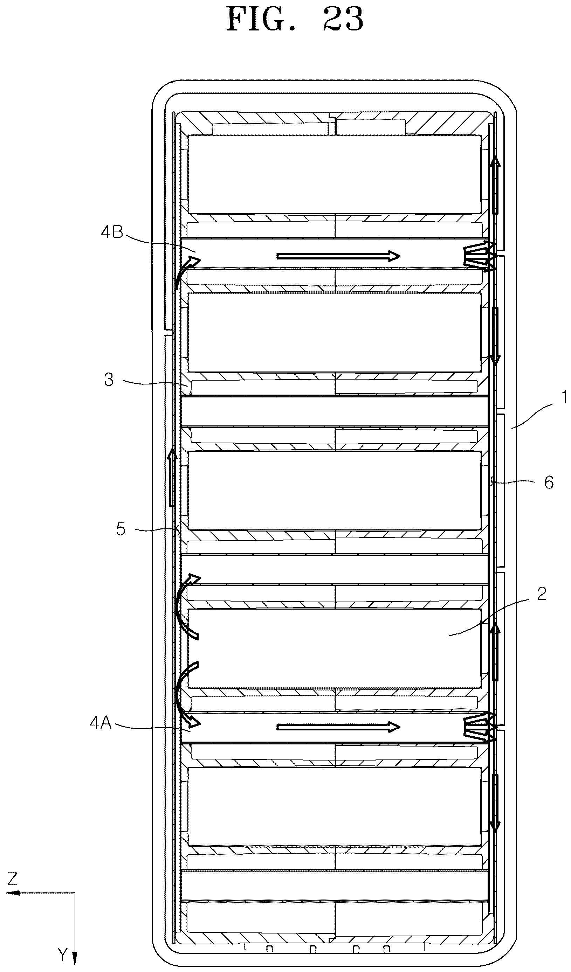

FIGS. 21 to 23 are conceptual diagrams for describing an example of a flame flow path generated if flames are emitted from the battery cell according to an embodiment of the present disclosure.

Referring to FIGS. 21 to 23, if any one of the plurality of battery cells 2 ignites, the flames are blocked by the first flame-retardant sheet 7 and cannot be emitted to the outside of the housing 1, and may be dispersed to the surroundings in the first dispersion space 5 formed inside the housing 1. Subsequently, the flames in the first dispersion space 5 may flow into the plurality of flame pipes 4 including the first flame pipe 4A and the second flame pipe 4B, may be discharged evenly into the second dispersion space 6 at a plurality of locations, and may be evenly dispersed in the second dispersion space 6.

By this action, a part of the flames emitted from the first surface 21 of the battery cell 2 may flow and be dispersed toward the second surface 22 opposite the first surface 21, and may be easily and quickly dispersed throughout the inner space of the housing 1, thereby reducing damage to the surrounding battery cells 2 in which ignition has not occurred.

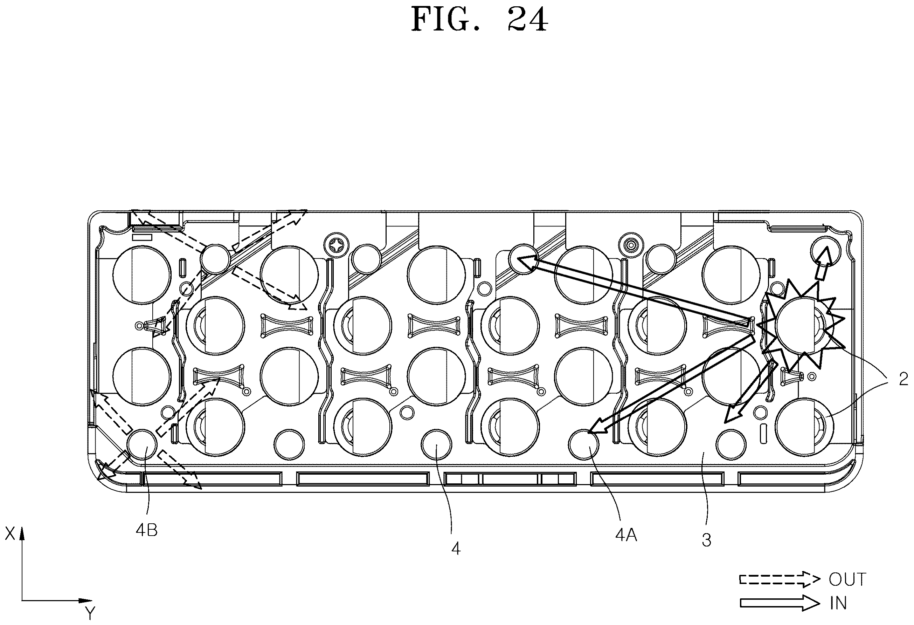

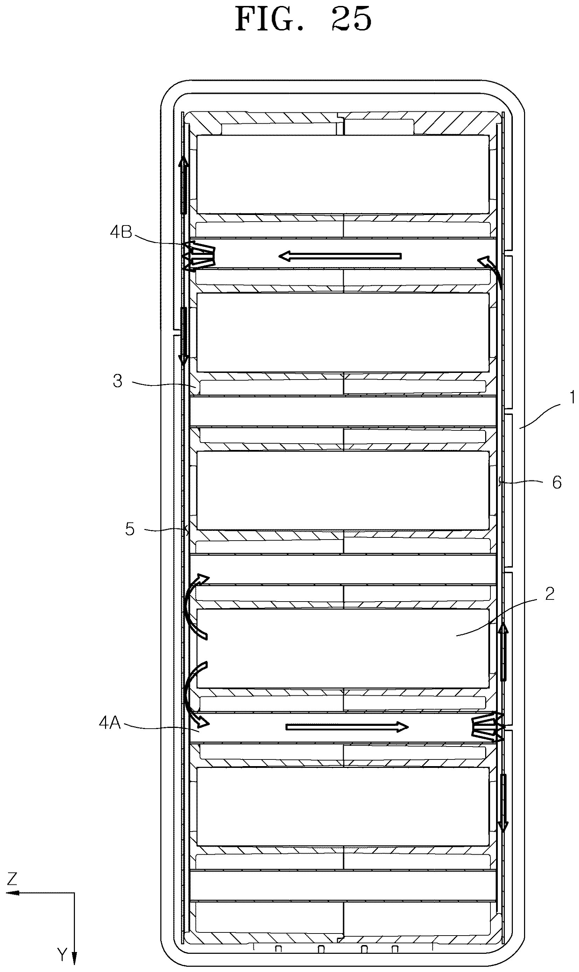

FIGS. 24 and 25 are conceptual diagrams for describing another example of a flame flow path generated if flames are emitted from the battery cell according to an embodiment of the present disclosure.

Referring to FIGS. 24 and 25, if any one of the plurality of battery cells 2 ignites, the flames are blocked by the first flame-retardant sheet 7 and cannot be emitted to the outside of the housing 1, and may be dispersed to the surroundings in the first dispersion space 5 formed inside the housing 1. Subsequently, the flames in the first dispersion space 5 may flow into the plurality of flame pipes 4 including the first flame pipe 4A, may be discharged into the second dispersion space 6 at a plurality of locations, and may be evenly dispersed in the second dispersion space 6.

Subsequently, the flames in the second dispersion space 6 may flow into the plurality of flame pipes 4 including the second flame pipe 4B, may be discharged into the first dispersion space 5 at a plurality of locations, and may be evenly dispersed in the first dispersion space 5.

By this action, it is possible to implement a flame flow having a closed loop structure in which a part of the flames emitted from the first surface 21 of the battery cell 2 flow and are dispersed toward the second surface 22 opposite the first surface 21, and a part of the flames emitted from the second surface 22 flow and are dispersed again toward the first surface 21 opposite the second surface 22. By this action, if the battery cell 2 ignites, the flames may be evenly and quickly dispersed throughout the entire space formed between the housing 1 and the holder 3.

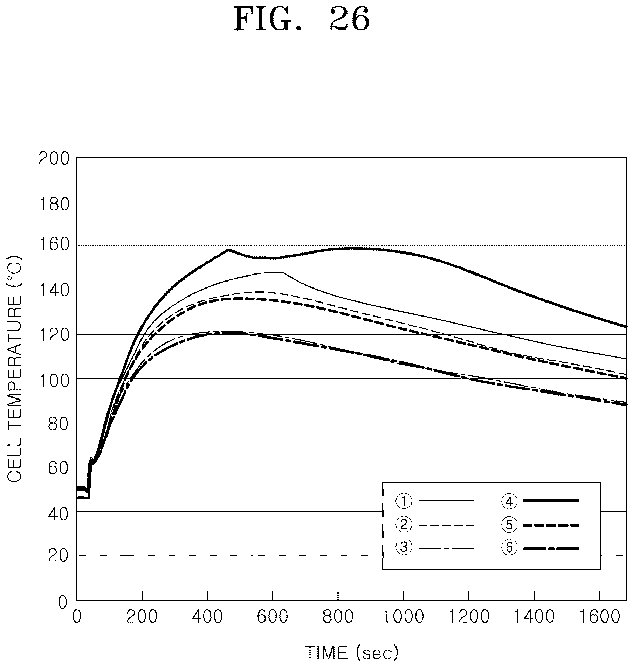

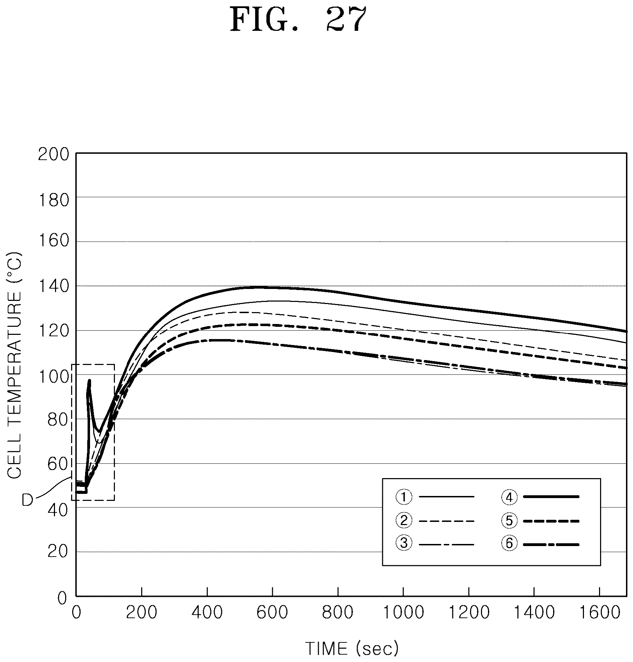

FIGS. 26 and 27 are graphs illustrating temperatures measured in a plurality of battery cells when the battery packs according to various embodiments of the present disclosure are applied.

In FIG. 26, ① is a line illustrating a temperature change measured in any one of the battery cells 2 when a conventional battery pack without the flame pipe 4 is applied. In FIG. 26, ② is a line illustrating a temperature change measured in the battery cell 2 at the same location when the battery pack with the flame pipe 4 is applied. In FIG. 26, ③ is a line illustrating a temperature change measured in the battery cell 2 at the same location when the battery pack to which the flame pipe 4 is applied is tested again under the same conditions.

In FIG. 26, ④ is a line illustrating a temperature change measured in any one of the battery cells 2 when the conventional battery pack without the flame pipe 4 is applied. In FIG. 26, ⑤ is a line illustrating a temperature change measured in the battery cell 2 at the same location when the battery pack with the flame pipe 4 is applied. In FIG. 26, ⑥ is a line illustrating a temperature change measured in the battery cell 2 at the same location when the battery pack to which the flame pipe 4 is applied is tested again under the same conditions.

In FIG. 26, the battery cell 2 whose temperature change is measured in ④, ⑤, and ⑥ is different from the battery cell 2 whose temperature change is measured in ①, ②, and ③.

When comparing ② and ③ in FIG. 26 with ① in FIG. 26, and comparing ⑤ and ⑥ in FIG. 26 with ④ in FIG. 26, it can be seen that the temperature of the battery cell 2 is relatively lower in the battery pack according to the embodiment of the present disclosure to which the flame pipe 4 is applied compared to the conventional battery pack to which the flame pipe 4 is not applied.

FIG. 27 is a graph illustrating a temperature change of the battery cell 2 measured during a penetration test performed on the battery cell 2.

In addition, in FIG. 27, ① is a line illustrating a temperature change measured in any one of the battery cells 2 when a conventional battery pack without the flame pipe 4 is applied. In FIG. 27, ② is a line illustrating a temperature change measured in the battery cell 2 at the same location when the battery pack with the flame pipe 4 is applied. In FIG. 27, ③ is a line illustrating a temperature change measured in the battery cell 2 at the same location when the battery pack to which the flame pipe 4 is applied is tested again under the same conditions.

In FIG. 27, ④ is a line illustrating a temperature change measured in any one of the battery cells 2 when the conventional battery pack without the flame pipe 4 is applied. In FIG. 27, ⑤ is a line illustrating a temperature change measured in the battery cell 2 at the same location when the battery pack with the flame pipe 4 is applied. In FIG. 27, ⑥ is a line illustrating a temperature change measured in the battery cell 2 at the same location when the battery pack to which the flame pipe 4 is applied is tested again under the same conditions.

In FIG. 26, the battery cell 2 whose temperature change is measured in ④, ⑤, and ⑥ is different from the battery cell 2 whose temperature change is measured in ①, ②, and ③.

When comparing ② and ③, and ① in the D area of FIG. 27, and comparing ⑤ and ⑥, and ④ in the D area of FIG. 27, compared to the conventional battery pack to which the flame pipe 4 is not applied, it can be seen that the temperature increase of the battery cell 2 when the flames occur is almost nonexistent or significantly lower in the battery pack according to the embodiment of the present disclosure to which the flame pipe 4 is applied.

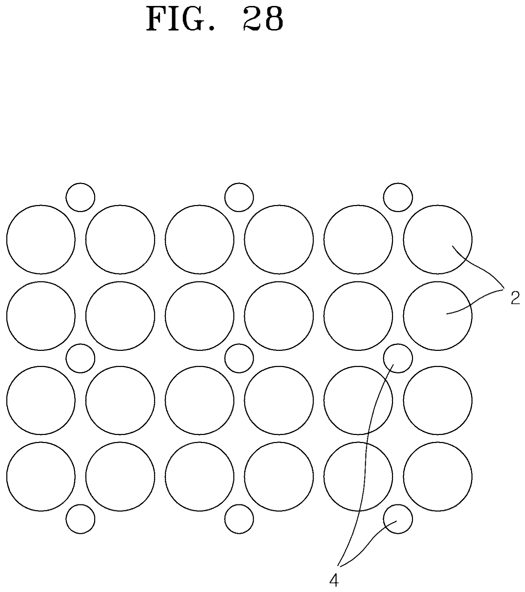

FIG. 28 is a conceptual diagram for describing various arrangement structures of the battery cells and the flame pipe according to an embodiment of the present disclosure.

In addition to the arrangement structure illustrated in FIG. 4, the battery cells 2 according to the present disclosure may have various arrangement structures including the arrangement structure illustrated in FIG. 28, and the flame pipe 4 may be disposed in various forms between the battery cells 2.

Referring to FIG. 4, the battery cells 2 forming the first cell layer L1 and the battery cells 2 forming the second cell layer L2 may not be located on the same vertical line (X direction extension line), but may be arranged in a staggered manner. According to this arrangement of the battery cells 2, the width of the battery pack in the up-down direction (X direction) may be reduced. In addition, since the battery cells 2 forming one battery cell layer may be spaced apart from each other in the left-right direction, the flame pipes 4 may be disposed therebetween.

Referring to FIG. 28, in an embodiment, all of the battery cells 2 forming each battery cell layer may be located on the same vertical line. According to the arrangement of the battery cells 2, the width of the battery pack in the left-right direction (Y direction) may be reduced. If a gap in which the flame pipe 4 may be disposed between the battery cells 2 forming one battery cell layer is not secured, the flame pipes 4 may be disposed adjacent to the battery cells 2 on at least one of the upper, lower, left, and right sides of the battery cells 2.

According to embodiments of the present disclosure, in a battery pack with the above-described configuration, if flames occur in any one of the battery cells 2, the flames are prevented or substantially prevented from being emitted to the outside of the housing 1, thereby preventing or substantially preventing the occurrence of fire or causalities due to the flames being emitted to the outside of the housing 1, and by actively guiding the flow of flames such that the flames may be evenly dispersed inside the housing 1 by the flame pipe 4, the effect on the surrounding battery cells 2 may be reduced, thereby preventing or substantially preventing chain ignition.

According to embodiments of the present disclosure, if flames occur in any one of the battery cells, the flames are prevented or substantially prevented from being emitted to the outside of the housing, thereby preventing or substantially preventing the occurrence of fire or causalities due to the flames being emitted to the outside of the housing, and by actively guiding the flow of flames so that the flames can be evenly dispersed inside the housing by a flame pipe, the effect on the surrounding battery cells can be reduced, thereby preventing or substantially preventing chain ignition.

However, aspects and effects obtainable through the present disclosure are not limited to the above aspects and effects, and other aspects and technical effects that are not mentioned will be clearly understood by those skilled in the art from the description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

## Claims

1. A battery pack comprising:
a housing;
a plurality of battery cells accommodated in the housing;
a holder in the housing and supporting the battery cells; and
one or more flame pipes in the holder and configured to guide a flow of flames emitted from a battery cell of the plurality of battery cells along a certain path.

2. The battery pack as claimed in claim 1, wherein the holder comprises:
a first holder supporting a first surface of each of the plurality of battery cells; and
a second holder supporting a second surface of each of the plurality of battery cells and facing the first holder in a first direction.

3. The battery pack as claimed in claim 2, wherein the first holder comprises:
a first holder main body;
one or more first holes in the first holder main body and passing therethrough such that at least a portion of the first surface is exposed to the housing; and
one or more second holes in the first holder main body and spaced apart from the first hole, in which the flame pipe is installed, and which forms a path through which flames between the first holder main body and the housing flow into the flame pipe.

4. The battery pack as claimed in claim 3, wherein the first holder main body comprises:
a first support plate extending in an arrangement direction of the plurality of battery cells;
a first outer surface on the first support plate, facing the housing, and defining a first dispersion space, in which flames emitted from the battery cell of the plurality of battery cells are dispersed, between the housing and the first outer surface;
a first inner surface on the first support plate and facing the plurality of battery cells; and
a first partition wall protruding from the first inner surface in the first direction and in contact with side surfaces of battery cells of the plurality of battery cells.

5. The battery pack as claimed in claim 4, wherein the first partition wall comprises:
a partition wall main body in contact with the side surfaces of the battery cells and configured to block flames emitted from the first surface from entering the side surfaces of the battery cells; and
a partition wall groove configured as a hollow in the partition wall main body such that the partition wall main body elastically contacts with the battery cell, and having a width that varies according to a contact pressure between the partition wall main body and the battery cell.

6. The battery pack as claimed in claim 3, 4 or 5, wherein the second holder comprises:
a second holder main body facing the first holder in the first direction; and
one or more third holes in the second holder main body and defining a path, in which flames passing through the flame pipe flow, between the second holder main body and the housing.

7. The battery pack as claimed in claim 6, wherein the second holder main body comprises:
a second support plate extending in an arrangement direction of the plurality of battery cells;
a second outer surface on the second support plate, facing the housing, and defining a second dispersion space, in which flames passing through the flame pipe are dispersed, between the housing and the second outer surface;
a second inner surface on the second support plate and facing the plurality of battery cells; and
a second partition wall protruding from the second inner surface in the first direction and in contact with side surfaces of the plurality of battery cells.

8. The battery pack as claimed in claim 6 or 7, wherein the second hole comprises a first pipe coupling portion to which an open first end portion of the flame pipe is coupled, and
the third hole comprises a second pipe coupling portion to which an open second end portion of the flame pipe is coupled.

9. The battery pack as claimed in claim 8, wherein the first holder further comprises a first pipe guide protruding from an edge of the second hole toward the second holder,
the second holder further comprises a second pipe guide protruding from an edge of the third hole toward the first holder, and
the flame pipe is arranged to cover a space between the first pipe guide and the second pipe guide.

10. The battery pack as claimed in any one of claims 2 to 9, further comprising:
a first dispersion space between the first holder and the housing and in which flames emitted from the battery cell are dispersed; and
a second dispersion space between the second holder and the housing and in which flames passing through the flame pipe are dispersed.

11. The battery pack as claimed in claim 10, wherein the flame pipe comprises:
a first flame pipe configured to guide a part of the flames in the first dispersion space to the second dispersion space; and
a second flame pipe spaced apart from the first flame pipe and configured to guide another part of the flames in the first dispersion space to the second dispersion space or guide the flames in the second dispersion space to the first dispersion space.

12. The battery pack as claimed in claim 1, wherein the flame pipe comprises:
a pipe main body arranged parallel to the battery cells; and
holder coupling portions at end portions of the pipe main body and coupled to the holder.

13. The battery pack as claimed in claim 12, wherein the holder comprises:
a first holder supporting a first surface of each of the plurality of battery cells; and
a second holder supporting a second surface of each of the plurality of battery cells and facing the first holder in a first direction, and
the holder coupling portions comprise:
a first holder coupling portion at a first end portion of the pipe main body and coupled by passing through the first holder; and
a second holder coupling portion at a second end portion of the pipe main body and coupled by passing through the second holder.

14. The battery pack as claimed in any preceding claim, further comprising a first flame-retardant sheet between the housing and the holder and covering an inner surface of the housing.

15. The battery pack as claimed in any preceding claim, further comprising a second flame-retardant sheet covering an outer surface of the battery cell exposed to an outside of the holder.
